(19) Europäisches Patentamt
European Patent Office
Office européen des brevets

(11) EP 3 020 686 A1

## (12) EUROPEAN PATENT APPLICATION
published in accordance with Art. 153(4) EPC

(43) Date of publication:
18.05.2016 Bulletin 2016/20

(51) Int Cl.:
C01B 33/02 (2006.01)    C01B 21/068 (2006.01)
B22C 3/00 (2006.01)

(21) Application number: 14822199.7

(22) Date of filing: 09.07.2014

(86) International application number:
PCT/JP2014/068324

(87) International publication number:
WO 2015/005390 (15.01.2015 Gazette 2015/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.07.2013 JP 2013145638

(71) Applicant: UBE Industries, Ltd.
Ube-shi, Yamaguchi 755-8633 (JP)

(72) Inventors:
• YAMAO, Takeshi
Ube-shi
Yamaguchi 755-8633 (JP)
• HONDA, Michio
Ube-shi
Yamaguchi 755-8633 (JP)
• JIDA, Shinsuke
Ube-shi
Yamaguchi 755-8633 (JP)
• FUJII, Takayuki
Ube-shi
Yamaguchi 755-8633 (JP)

(74) Representative: Tischner, Oliver
Lavoix Munich
Bayerstrasse 83
80335 München (DE)

(54) **SILICON NITRIDE POWDER FOR MOLD RELEASE AGENT OF CASTING MOLD FOR CASTING POLYCRYSTALLINE SILICON INGOT AND METHOD FOR MANUFACTURING SAID SILICON NITRIDE POWDER, SLURRY CONTAINING SAID SILICON NITRIDE POWDER, CASTING MOLD FOR CASTING POLYCRYSTALLINE SILICON INGOT AND METHOD FOR MANUFACTURING SAME, AND METHOD FOR MANUFACTURING POLYCRYSTALLINE SILICON INGOT CAST USING SAID CASTING MOLD**

(57) Provided is a silicon nitride powder for a mold release material of a casting mold for casting a polycrystalline silicon ingot capable of preparing a polysilicon ingot having a high photoelectric conversion efficiency at low cost. Provided is a silicon nitride powder for a mold release agent of a casting mold for casting a polycrystalline silicon ingot and a method for manufacturing the silicon nitride powder, a slurry containing the silicon nitride powder, a casting mold for casting a polycrystalline silicon ingot and a method for manufacturing the same, and a method for manufacturing a polycrystalline silicon ingot cast using the casting mold, the specific surface area being 5 to 40 $m^2/g$, FS/FSO being 8 to 30 and FS/FIO being 22 or higher, where FSO (mass%) is the content ratio of oxygen present in the particle surface layer, FIO (mass%) is the content ratio of oxygen present inside the particles, and FS ($m^2/g$) is the specific surface area, and the ratio D10/D90 between the 10-vol% diameter (D10) and the 90-vol% diameter (D90) being 0.05 to 0.20 in a measurement of grain size distribution.

EP 3 020 686 A1

**Description**

TECHNICAL FIELD

The present invention relates to a silicon nitride powder for a release agent of a polycrystalline silicon ingot casting mold that allows for the manufacture of a polycrystalline silicon ingot with high photoelectric conversion efficiency at a low cost, a method for producing the silicon nitride powder, a slurry containing the silicon nitride powder, a polycrystalline silicon ingot casting mold, a method for manufacturing the casting mold, and a method for manufacturing a polycrystalline silicon ingot by using the casting mold.

BACKGROUND ART

Polycrystalline silicon is widely used as a semiconductor substrate for the formation of a solar cell and the production volume thereof is increasing year by year. Such polycrystalline silicon is usually produced by a method of pouring molten silicon in a quartz-made mold or a divisible graphite-made mold and solidifying the molten silicon, or a method of melting and solidifying a silicon raw material housed in a mold. In recent years, among others, a low-priced polycrystalline silicon substrate is required, and in order to satisfy such a requirement, cost reduction of a polycrystalline silicon ingot is necessary. For this purpose, development of a technique for making it possible to manufacture, at a low cost, a mold capable of manufacturing a polycrystalline silicon ingot in high yield is important.

In order to manufacture a polycrystalline silicon ingot in high yield, it is necessary that the releasability of a polycrystalline silicon ingot from a mold is good and the polycrystalline silicon ingot is prevented from chipping, etc., during the releasing from the mold. Usually, for the purpose of improving the releasability of a polycrystalline silicon ingot from a mold and inhibiting mixing of impurities from the mold, a release layer is formed on the inner surface of a polycrystalline silicon ingot casting mold. Accordingly, for improving the releasability of a polycrystalline silicon ingot from a mold, it is necessary that a dense release layer with good releasability can be formed on the inner surface of a mold. In addition, it is necessary that as well as the capability of forming a dense release layer with a high releasability on the inner surface of a mold, the release layer can be formed on a mold by a low-cost process. As the material (release agent) of the release layer, a high-purity powder of silicon nitride, silicon carbide, silicon oxide, etc., or a mixed powder thereof is generally used, because of its characteristic features that the melting point is high and the silicon ingot is less contaminated, and a larger number of researches and developments than ever are being made on a release agent composed of such a powder, a method of coating a mold surface with a release agent to form a release layer, and a method of manufacturing a silicon ingot by using a mold having formed thereon a release layer.

For example, Patent Document 1 discloses a method for manufacturing a mold for the manufacture of a silicon ingot, including subjecting a silicon nitride powder to a surface oxidation treatment at 700 to 1,300°C in air, mixing the powder with silicon dioxide having an average particle diameter of about 20 μm, adding an aqueous polyvinyl alcohol (PVA) solution as a binder, kneading the mixture to make a green body, further adding dropwise the aqueous binder solution, and repeating a process of coating a mold with the produced slurry and heat-treating (drying) the coating at 160 to 260°C 10 times.

Patent Document 2 discloses a method for manufacturing a polycrystalline silicon ingot casting mold, including coating a mold with a slurry having blended therein silicon nitride powders differing in the average particle diameter, which are obtained by firing of an amorphous silicon nitride powder housed in a graphite crucible, and after drying, firing the coating at 1,100°C in the atmosphere. It is stated that by forming, on the mold side, a release layer having a large proportion of a silicon nitride particle with a small particle diameter and forming, on the molten silicon side, a release layer having a large proportion of a silicon nitride particle with a large particle diameter, a high-quality silicon ingot can be obtained in high yield while preventing a polycrystalline silicon ingot from being anchored to a mold surface or suppressing occurrence of chipping or breakage at the time of release of a polycrystalline silicon ingot.

RELATED ART

PATENT DOCUMENT

Patent Document 1: Kokai (Japanese Unexamined Patent Publication) No. 2010-195675
Patent Document 2: International Publication N. 2012/090541
Patent Document 3: Kokai No. 9-156912
Patent Document 4: Kokai No. 4-209706

## SUMMARY OF THE INVENTION

### PROBLEMS TO BE SOLVED BY THE INVENTION

However, the method for manufacturing a mold described in Patent Document 1 requires many steps, for example, a step of previously heat-treating a silicon nitride powder in air at a high temperature of 700 to 1,300°C, a step of mixing the silicon nitride powder and silicon dioxide, a step of adding an aqueous binder solution to the resulting mixed powder and kneading the mixture, and a step of further diluting the kneaded product to prepare a slurry. Equipment for the oxidation treatment of a silicon nitride powder is necessary, and many steps are cumbersome, as a result, the production cost of a mold becomes high. In addition, although the temperature for heat treatment after the coating of a release agent is set to 300°C or less, C (carbon) derived from the binder cannot be removed from the release layer at that temperature and therefore, C (carbon) gets mixed in with the molten silicon from the release layer and remains as an impurity in a polycrystalline silicon ingot. Application of such a polycrystalline silicon ingot as a substrate leads to a failure in providing high photoelectric conversion efficiency to a solar cell. In order to obtain a polycrystalline silicon ingot with a small C (carbon) content, the temperature for heat treatment after the coating of a release agent needs to be set high and in turn, the production cost of a polycrystalline silicon ingot further rises.

The method for manufacturing a mold described in Patent Document 2 requires a step of mixing a silicon nitride powder having a large average particle diameter and a silicon nitride powder having a small average particle diameter, and a step of baking a release layer at a high temperature (1,100°C). Since a time-spending mixing step and a high-temperature heat treatment unit for the baking of a release layer are needed, this manufacturing method of a mold cannot be said to be a low-cost method, either. Furthermore, for adjusting the average particle diameter of a silicon nitride powder, the filling amount needs to be controlled by changing the method of filling a raw material in the firing step for the production of a silicon nitride powder, as a result, the productivity of the silicon nitride powder tends to be deteriorated. In addition, such a silicon nitride powder for a release agent includes a silicon nitride powder obtained by a method of putting an amorphous SiN(-H)-based compound powder as a raw material in a graphite crucible and firing the powder and therefore, Fe (iron) inevitably present in the graphite crucible gets mixed in with the silicon nitride powder, as a result, the obtained silicon nitride powder contains a given amount of Fe (iron). From a mold on which inner surface a release layer composed of such a silicon nitride powder is formed, Fe (iron) is likely to get mixed into molten silicon, leaving a problem that a substrate with high photoelectric conversion efficiency cannot be produced using the obtained polycrystalline silicon ingot.

The present invention has been made by taking into account the above-described conventional problems, and an object of the present invention is to provide a silicon nitride powder for a release agent of a polycrystalline silicon ingot casting mold, ensuring that a release layer allowing high releasability of a polycrystalline silicon ingot and exhibiting high adherence to a mold even after the casting of a polycrystalline silicon ingot can be formed on a polycrystalline silicon ingot casting mold by low-temperature baking without using an additive such as binder; a method for producing the silicon nitride powder; a slurry containing the silicon nitride powder; a polycrystalline silicon ingot casting mold allowing good releasability of a polycrystalline silicon ingot; a method for manufacturing the mold at a low cost; and a method for manufacturing a polycrystalline silicon ingot by using the mold.

### MEANS TO SOLVE THE PROBLEMS

In order to attain the object above, the present inventors have made many intensive studies on a silicon nitride powder for a release agent of a polycrystalline silicon ingot casting mold capable of preparing a polycrystalline silicon ingot with high yield at a low cost, as a result, it has been found that a silicon nitride powder having a specified specific surface area, a specified surface oxygen content ratio, a specified internal oxygen content ratio and a specified particle size distribution, which is obtained by firing an amorphous Si-N(-H)-based compound with a specified specific surface area and a specified oxygen content ratio at a specified temperature rise rate while flowing the compound in a continuous firing furnace, is a silicon nitride powder suitable for solving the problem above.

The present inventors have found that when the silicon nitride powder of the present invention is used for a release agent of a polycrystalline silicon ingot casting mold, notwithstanding no need for an additive such as binder, a dense and firm release layer can be formed by low-temperature baking and a release layer allowing high releasability between a polycrystalline silicon ingot and a mold surface can be formed. The present invention has been accomplished based on these findings.

That is, the present invention relates to a silicon nitride powder for a release agent of a polycrystalline silicon ingot casting mold, wherein:

the specific surface area is from 5 to 40 m$^2$/g,
assuming that the content ratio of oxygen present in a particle surface layer is FSO (mass%), the content ratio of oxygen present inside a particle is FIO (mass%), and the specific surface area is FS ($m^2$/g),

FS/FSO is from 8 to 30 and
FS/FIO is 22 or more,

and
the ratio D10/D90 between the 10 vol% diameter D10 and the 90 vol% diameter D90 in the measurement of a particle size distribution on a volume basis by a laser diffraction particle size distribution meter is from 0.05 to 0.20.

The present invention also relates to the above-described silicon nitride powder for a release agent of a polycrystalline silicon ingot casting mold, wherein the Fe (iron) content is 10 ppm or less.

The present invention also relates to a method for producing the above-described silicon nitride powder for a release agent of a polycrystalline silicon ingot casting mold, which is a method for producing a silicon nitride powder by firing an amorphous Si-N(-H)-based compound with a specific surface area of 300 to 1,200 $m^2$/g at a temperature of 1,400 to 1,700°C in a nitrogen-containing inert gas atmosphere or a nitrogen-containing reducing gas atmosphere while flowing the compound in a continuous firing furnace, wherein

assuming that the specific surface area of the amorphous Si-N(-H)-based compound is RS ($m^2$/g) and the oxygen content ratio is RO (mass%), RS/RO is 100 or more, and

at the time of the firing, the amorphous Si-N(-H)-based compound is heated at a temperature rising rate of 12 to 500°C/min in a temperature range from 1,100 to 1,400°C.

The present invention also relates to a slurry containing the silicon nitride powder for a release agent of a polycrystalline silicon ingot casting mold, which is obtained by mixing the silicon nitride powder with water.

The present invention also relates to a method for manufacturing a polycrystalline silicon ingot casting mold having a release layer, including:

a slurry forming step of mixing the above-described silicon nitride powder with water to form a slurry,
a slurry applying step of coating a mold surface with the slurry,
a slurry drying step of drying the slurry applied onto the mold surface, and
a heat treatment step of heating, in an oxygen-containing atmosphere, the mold of which surface is coated with the slurry.

The present invention also relates to a polycrystalline silicon ingot casting mold having, on an inner surface of the mold, a release layer composed of the above-described silicon nitride powder.

Furthermore, the present invention relates to a method for manufacturing a polycrystalline silicon ingot, including:

a step of casting a polycrystalline silicon ingot by using the above-described polycrystalline silicon ingot casting mold,
a step of taking out a polycrystalline silicon ingot from the mold, and
a step of removing a release layer composed of the silicon nitride powder from an inner surface of the mold.

EFFECTS OF THE INVENTION

When the silicon nitride powder of the present invention is used for a release agent of a polycrystalline silicon ingot casting mold, notwithstanding the need for an additive such as binder, a dense and firm release layer with high releasability can be formed by low-temperature baking without causing chipping or breakage in the released polycrystalline silicon ingot.

Therefore, according to the present invention, a silicon nitride powder for a release agent, capable of easily and inexpensively forming a release layer of a polycrystalline silicon ingot casting mold that allows for the manufacture of a polycrystalline silicon ingot in high yield, a slurry containing the silicon nitride powder, a polycrystalline silicon ingot casting mold having formed thereon a release layer using the silicon nitride powder, and a method for manufacturing a polycrystalline silicon ingot by using the mold, can be provided.

BRIEF DESCRIPTION OF THE DRAWINGS

[Fig. 1] A cross-sectional view of a polycrystalline silicon ingot casting mold where a release layer is formed using the silicon nitride powder for a release agent of the present invention.
[Fig. 2] An SEM image of the release layer cross-section of the polycrystalline silicon ingot casting mold of Example 2.

[Fig. 3] An SEM image of the release layer cross-section of the polycrystalline silicon ingot casting mold of Comparative Example 13.

MODE FOR CARRYING OUT THE INVENTION

First, the silicon nitride powder for a release agent of a polycrystalline silicon ingot casting mold of the present invention is described.

The silicon nitride powder of the present invention is a silicon nitride powder where the specific surface area is from 5 to 40 $m^2/g$; assuming that the content ratio of oxygen present in a particle surface is FSO (mass%), the content ratio of oxygen present inside a particle is FIO (mass%), and the specific surface area is FS ($m^2/g$), FS/FSO is from 8 to 30 and FS/FIO is 22 or more; and the ratio D10/D90 between the 10 vol% diameter D10 and the 90 vol% diameter D90 in the measurement of a particle size distribution on a volume basis by a laser diffraction particle size distribution meter is from 0.05 to 0.20, and this is a silicon nitride powder useful as a release agent of a polycrystalline silicon ingot casting mold that allows for the manufacture of a polycrystalline silicon ingot at a low cost.

The specific surface area FS of the silicon nitride powder of the present invention is from 5 to 40 $m^2/g$, preferably from 7 to 35$m^2/g$. If the specific surface area is less than 5 $m^2/g$, the adherence between particles and between a release layer and a mold is reduced, making it difficult to form a dense release layer with high adhesion strength by low-temperature baking in air, and high-temperature baking is necessary, which brings about an increase in the damage to the mold, or the adherence of the release layer cannot be improved even when the baking temperature is raised. In the case of using a mold where such a release layer is formed, anchoring of a silicon ingot to the mold surface or chipping or breakage at the time of releasing a solidified silicon ingot occurs to cause cracking of a polycrystalline silicon ingot or reduction in the yield. On the other hand, if the specific surface area exceeds 40 $m^2/g$, a dense release layer cannot be obtained due to strong repulsive force between grains and in addition, the release layer is likely to be separated in the drying step. Also in the case of using a mold where such a release layer is formed, anchoring of a silicon ingot to the mold surface or chipping or breakage at the time of releasing a solidified silicon ingot occurs to cause cracking of a polycrystalline silicon ingot or reduction in the yield.

In the silicon nitride powder of the present invention, the ratio FS/FSO between the specific surface area FS and the content ratio FSO of oxygen present in a particle surface is from 8 to 30. For example, the average primary particle diameter of a silicon nitride powder having a specific surface area FS of 10 $m^2/g$ is about 2,000 angstrom, and it can be confirmed by a transmission electron microscope that an amorphous oxide layer with a small thickness of a few angstroms is present on the particle surface. The amorphous oxide layer on the particle surface is as very small as a few angstroms, but in the case where the mold is made of quartz ($SiO_2$), the layer plays an important function in increasing the adherence of a silicon nitride release layer to the mold. When the silicon nitride powder is mixed with water to form a slurry, an Si-OH group is produced on the surface of silicon nitride particles. When the slurry is applied onto a mold surface, dried and baked, the Si-OH group is dehydrated and an Si-O-Si bond is formed between silicon nitride particles and between silicon nitride particles and the mold surface. Due to this bonding, the adherence between silicon nitride particles and between silicon nitride particles and the mold surface is increased and even at a baking temperature of 400°C, a firm silicon nitride release layer is formed on the mold surface.

The content ratio FSO of oxygen present in a surface layer (surface oxygen) and the content ratio FIO of oxygen present inside a particle of the silicon nitride powder according to the present invention can be measured by the following method. First, the silicon nitride powder is weighed, and FTO (mass%) as a content ratio of all oxygen that is a total of surface oxygen and internal oxygen of the silicon nitride powder, is measured by an inert gas fusion-carbon dioxide infrared absorption method (Model TC-136, manufactured by LECO) in conformity with "10. Oxygen Quantification Method" of "JIS R1603 Chemical Analysis Method of Silicon Nitride Fine Powder for Fine Ceramics". Next, the weighed silicon nitride powder is subjected to mixing of the silicon nitride powder with an aqueous hydrofluoric acid solution such that hydrogen fluoride accounts for 5 parts by mass per part by mass of the silicon nitride powder, and the mixture is stirred at room temperature (25°C) for 3 hours and suction-filtered. The obtained solid material is vacuum-dried at 120°C for 1 hour, and the weight of this hydrofluoric acid-treated powder is measured. The oxygen content of the obtained powder is measured by the same infrared absorption method as in the FSO measurement above, and this value is taken as FIO before correction (mass% relative to the hydrofluoric acid-treated powder). The content ratio FIO (mass% relative to the silicon nitride powder) of internal oxygen is calculated according to the following formula (3). The content ratio FSO (mass% relative to the silicon nitride powder) of surface oxygen is calculated according to the following formula (4).

$$\text{FIO (mass\%)} = ((\text{weight of hydrofluoric acid-treated powder) (g))} / (\text{weight of silicon nitride powder (g)}) \times \text{FIO before correction (mass\%)} \qquad (3)$$

$$FSO\ (mass\%) = FTO\ (mass\%) - FIO\ (mass\%) \qquad (4)$$

According to this measurement method, oxygen present in a range from the particle surface to approximately 3 nm beneath the particle surface and oxygen present in a more inward side than 3 nm beneath the particle surface are measured, but the thickness of the amorphous oxide layer on the particle surface, which can be confirmed by the observation through a transmission electron microscope, is a few angstroms and smaller than 3 nm. The oxygen concentration in a region except for the amorphous oxide layer is almost constant irrespective of the distance from the particle surface and is far lower than that in the amorphous oxide layer, so that the oxygen content ratio in a particle surface measured by this measurement method can be regarded as the content ratio of oxygen present in the particle surface. In addition, the region to approximately 3 nm beneath the particle surface, which is removed by the hydrofluoric acid treatment, is small compared with the region in a more inward side than approximately 3 nm beneath the particle surface, which is not removed, the oxygen content ratio inside a particle measured by this measurement method can be regarded as the content ratio of oxygen present inside the particle excluding the particle surface layer. According to the above-described hydrofluoric acid treatment and measurement method, oxygen present in a range from the particle surface to approximately 3 nm beneath the particle surface is measured, and this can be confirmed by the X-ray photoelectron spectroscopy depth profile of the powder before and after the hydrofluoric acid treatment and the change in weight of the powder between before and after the treatment. In addition, as described above, the "surface layer of the silicon nitride powder" relevant to the FSO measurement method in the present invention is, in other words, a portion dissolved out in the hydrofluoric acid treatment above (a treatment "where the silicon nitride powder is subjected to mixing of the silicon nitride powder with an aqueous hydrofluoric acid solution such that hydrogen fluoride accounts for 5 parts by mass per part by mass of the silicon nitride powder, the mixture is stirred at room temperature (25°C) for 3 hours and suction-filtered, and the obtained solid material is vacuum-dried at 120°C for 1 hour").

Accordingly, although the amorphous oxide layer on the silicon nitride particle surface may necessary for increasing the adherence between a quartz-made mold surface and a particle, if FS/FSO is less than 8, the amorphous oxide layer is not preferred, because the proportion of the amorphous oxide layer becomes too large and the wettability of the formed release layer to molten silicon increases, leading to deterioration of the releasability of an Si ingot. On the other hand, if FS/FSO exceeds 30, the adherence between silicon nitride particles is reduced and therefore, the baking temperature must be set high. FS/FSO is preferably from 15 to 30, more preferably from 15 to 27.

In the silicon nitride powder of the present invention, the content ratio FIO of oxygen present inside a particle is a value varying depending on the oxygen content in the amorphous Si-N(-H)-based compound and as compared with the conventional firing method by an imide method (for example, Patent Document 2), a powder having a high specific surface area FS relative to the oxygen content of the silicon nitride powder can be obtained by the preparation method of the present invention. The ratio FS/FIO is 22 or more. If FS is small and FS/FIO is less than 22, the baking temperature must be set high, and at a low baking temperature of 400°C or close thereto, releasability of a polycrystalline silicon ingot from the mold is deteriorated. FS/FIO is preferably from 22 to 100, more preferably from 30 to 60.

The particle size distribution of the silicon nitride powder of the present invention is in the range specified below. When measured by a laser diffraction/scattering particle diameter distribution analyzer, the ratio D10/D90 between the 10 vol% diameter D10 and the 90 vol% diameter D90 is from 0.05 to 0.20. If D10/D90 is less than 0.05, the proportion of fine particles contained in the silicon nitride powder or a coarse aggregated particle becomes large. When the proportion of a fine particles is large, the density of the release layer decreases, and when the proportion of a coarse aggregated particles is large, a coarse aggregated particles is separated and precipitated in the slurry, producing unevenness in the particle size distribution within the slurry. When such a slurry is applied onto a mold surface, a portion having a high proportion of coarse aggregated particles with poor adherence or a portion having a high proportion of non-densifiable fine particles is produced, and the density of the release layer cannot be made uniform. In addition, the release layer is likely to crack at the boundary between layers differing in the density during drying or baking. If D10/D90 exceeds 0.20, the proportion of granular coarse particles becomes high and therefore, the adherence of the release layer is reduced. D10/D90 is preferably from 0.10 to 0.20.

In the silicon nitride powder of the present invention, the Fe (iron) content is preferably 10 ppm or less. When the Fe (iron) content is 10 ppm or less, the amount of Fe (iron) diffusing into a silicon ingot from the release layer is small, and high photoelectric conversion efficiency of a polycrystalline silicon substrate can be realized. The Fe (iron) content is preferably 6 ppm or less, more preferably 3 ppm or less.

Next, a method for producing the silicon nitride powder for a release agent of a polycrystalline silicon ingot casting mold of the present invention is described.

The silicon nitride powder of the present invention can be produced by firing an amorphous Si-N(-H)-based compound in which the specific surface area is from 300 to 1,200 $m^2$/g and assuming that the specific surface area is RS ($m^2$/g) and the oxygen content ratio is RO (mass%), RS/RO is 100 or more, at a temperature of 1,400 to 1,700°C, after heating at a temperature rising rate of 12 to 500°C/min in a temperature range from 1,100 to 1,400°C, in a nitrogen-containing inert gas atmosphere or a nitrogen-containing reducing gas atmosphere while flowing the compound in a continuous firing furnace in which a graphite crucible is not used.

In the present invention, an amorphous Si-N(-H)-based compound is fired to produce a crystalline silicon nitride powder. The amorphous Si-N(-H)-based compound for use in the present invention is an amorphous Si-N(-H)-based compound containing Si, N and H elements or an amorphous silicon nitride containing Si and N, each obtained by heating and decomposing part or the whole of a nitrogen-containing silane compound such as silicon diimide, silicon tetraamide and silicon chloroimide, and is represented by the following composition formula (1). Incidentally, in the present invention, the amorphous SiN(-H)-based compound encompasses all of a series of compounds represented by composition formula (1), from $Si_6N_i(NH)_{10.5}$ when x=0.5 to amorphous silicon nitride when x=4, and $Si_6N_6(NH)_3$ when x=3 is called silicon nitrogen imide.

$$Si_6N_{2x}(NH)_{12-3x} \qquad (1)$$

(provided that x=0.5 to 4 in the formula and although not shown in the composition formula, the compound includes a compound containing a halogen as an impurity; the amount of a halogen contained as an impurity is generally less than 100 ppm but may be preferably less than 50 ppm, less than 20 ppm, furthermore, less than 10 ppm).

As the nitrogen-containing silane compound for use in the present invention, silicon diimide, silicon tetraamide, silicon chloroimide, etc., are used. These compounds are represented by the following composition formula (2). In the present invention, for the sake of convenience, the nitrogen-containing silane compound represented by the following composition formula (2) where y=8 to 12 is referred to as silicon diimide.

$$Si_6(NH)_y(NH_2)_{24-2y} \qquad (2)$$

(provided that y=0 to 12 in the formula and although not shown in the composition formula, the compound includes a compound containing a halogen as an impurity).

The amorphous Si-N(-H)-based compound for use in the present invention is produced by a known method, for example, a method of heating and decomposing the above-described nitrogen-containing silane compound in a nitrogen or ammonia gas atmosphere at a temperature of 1,200°C or less, or a method of reacting a silicon halide, such as silicon tetrachloride, silicon tetrabromide and silicon tetraiodide, with ammonia at a high temperature.

The specific surface area of the amorphous Si-N(-H)-based compound as the raw material of the silicon nitride powder of the present invention is from 300 to 1,200 $m^2/g$. If the specific surface area of the amorphous Si-N(-H)-based compound is less than 300 $m^2/g$, abrupt crystallization takes place in a temperature range from 1,000 to 1,400°C, particularly from 1,100 to 1,400°C, to increase the rate of production of a needle-like particle or an aggregated particle. Even when a release layer of a polycrystalline silicon ingot casting mold is formed using such a silicon nitride powder, a dense and firm release layer is not formed, and anchoring of a silicon ingot to a mold surface or chipping or breakage at the time of releasing a solidified silicon ingot occurs to cause cracking of a polycrystalline silicon ingot or reduction in the yield. On the other hand, if the specific surface area of the amorphous Si-N(-H)-based compound exceeds 1,200 $m^2/g$, the oxygen content ratio of the obtained silicon nitride powder is likely to vary. Because, the amorphous Si-N(-H)-based compound is susceptible to oxidation by oxygen or water and therefore, between molding of the amorphous Si-N(-H)-based compound into a granule and firing thereof, the oxygen content ratio of the amorphous Si-N(-H)-based compound readily varies under the effect of variation in the oxygen or water content in the atmosphere and in turn, the oxygen content of the obtained silicon nitride powder is likely to vary. In the case where a silicon nitride powder varying in the oxygen content is applied as a release agent onto a mold and baked in air, the oxygen content of the release layer varies within the mold as well as among individual molds and in turn, the releasability of a polycrystalline silicon ingot differs within a mold as well as among individual molds, making it difficult to stably produce a polycrystalline silicon ingot in high yield. In addition, if the specific surface area of the amorphous Si-N(-H)-based compound exceeds 1,200 $m^2/g$, the amorphous Si-N(-H)-based compound is low in the powder bulk density and cannot be molded into a granule with a high density. In this case, the thermal conduction of the amorphous Si-N(-H)-based compound is deteriorated, and the quality is likely to vary among silicon nitride powders obtained.

The amorphous Si-N(-H)-based compound for use in the present invention is an amorphous Si-N(-H)-based compound in which assuming that the specific surface area of the amorphous Si-N(-H)-based compound is RS ($m^2/g$) and the oxygen content ratio is RO (mass%), RS/RO is 100 or more. If RS/RO is less than 100, the specific surface area of the obtained silicon nitride powder exceeds 40 $m^2/g$, and a dense release layer cannot be formed. RS/RO may be 200 or more, furthermore, 500 or more.

The oxygen content ratio of the amorphous Si-N(-H)-based compound can be adjusted by controlling the oxygen amount of a nitrogen-containing silane compound and the oxygen partial pressure (oxygen concentration) in the atmosphere during the decomposition by heating of the nitrogen-containing silane compound. As the oxygen amount of the nitrogen containing silane compound is smaller or as the oxygen partial pressure in the atmosphere at the time of decomposition by heating is lower, the oxygen content ratio of the amorphous Si-N(-H)-based compound can be reduced. The oxygen content ratio of the nitrogen-containing silane compound can be adjusted by the concentration of oxygen in an atmosphere gas during reaction in the case of reacting a silicon halide such as silicon tetrachloride, silicon tetrabromide or silicon tetraiodide with ammonia in a gas phase, or can be adjusted by controlling the water amount in an organic reaction solvent such as toluene in the case of reacting the silicon halide above with liquid ammonia. As the water amount in an organic reaction solvent is smaller, the oxygen content ratio of the nitrogen-containing silane compound can be reduced.

On the other hand, the specific surface area of the amorphous Si-N(-H)-based compound can be adjusted by the specific surface area of a nitrogen-containing silane compound working out to the raw material thereof and the maximum temperature at the decomposition by heating of the nitrogen-containing silane compound. As the specific surface area of the nitrogen-containing silane compound is larger or as the maximum temperature at the decomposition by heating is lower, the specific surface area of the amorphous Si-N(-H)-based compound can be increased. The specific surface area of the nitrogen-containing silane compound can be adjusted, when the nitrogen-containing silane compound is silicon diimide, by a known method described, for example, in Patent Document 3, i.e., a method of changing the volume ratio between the silicon halide and the liquid ammonia (silicon halide/liquid ammonia) in the reaction of a silicon halide with liquid ammonia. The specific surface area of the nitrogen-containing silane compound can be increased by raising the above-described silicon halide/liquid ammonia ratio.

In the present invention, at the time of firing the amorphous Si-N(-H)-based compound in a nitrogen-containing inert gas atmosphere or a nitrogen-containing reducing gas atmosphere, the amorphous Si-N(-H)-based compound is fired at a temperature of 1,400 to 1,700°C by using a continuous firing furnace. As the heating furnace used for heating of the amorphous Si-N(-H)-based compound, a continuous firing furnace such as rotary kiln, shaft kiln and fluidized firing furnace is used. Such a continuous firing furnace is an effective measure for the efficient diffusion of heat generated in association with a crystallization reaction of the amorphous silicon nitride. Among these continuous firing furnaces, a rotary kiln is suitable for forming a homogeneous powder and is a particularly preferable firing furnace, because the powder is transferred under stirring by the rotation of a furnace tube, thus enabling efficient dissipation of the heat of crystallization, and due to no need for use of a graphite-made container, an impurity does not substantially get mixed during firing.

The amorphous Si-N(-H)-based compound may be compacted or shaped into a granular shape. When shaped in a granular shape, the flowability of the powder is increased and at the same time, the bulk density can be increased, so that the processing capacity in a continuous firing furnace can be raised. In addition, the heat transfer state of the powder layer can also be improved.

The maximum temperature inside a furnace tube during firing in a continuous firing furnace, i.e., the firing temperature, is from 1,400 to 1,700°C. If the firing temperature is less than 1,400°C, sufficient crystallization is not achieved, and a large amount of easily oxidizable amorphous silicon nitride is contained in the silicon nitride powder. If the firing temperature exceeds 1,700°C, this is not preferred, because not only a coarse crystal grows but also the produced crystalline silicon nitride powder starts decomposing.

During the firing in a continuous firing furnace in the present invention, the amorphous Si-N(-H)-based compound is heated at a temperature rising rate of 12 to 500°C/min, preferably from 15 to 500°C/min, in a temperature range from 1,100 to 1,400°C, preferably from 1,000 to 1,400°C. The reason therefor is described below.

In the present invention, a silicon nitride powder is obtained by firing an amorphous Si-N(-H)-based compound. In the temperature range from 1,000 to 1,400°C during firing, a crystal nucleus is generated in the amorphous silicon nitride powder, and crystallization of the amorphous silicon nitride starts while releasing the heat of crystallization, as a result, the crystallized silicon nitride undergoes grain growth. The crystal nucleus generation density and the grain growth are abruptly increased particularly in a temperature range from 1,100 to 1,400°C.

In the firing, heating at a temperature rising rate of 12 to 500°C/min, preferably from 15 to 500°C/min, is performed in a temperature range from 1,100 to 1,400°C, preferably from 1,000 to 1,400°C, whereby the surface energy is decreased due to grain growth of the amorphous silicon nitride before crystallization and not only a proper crystal nuclei generation density is achieved but also grain growth at the initial stage of crystallization is suppressed. This makes it possible to obtain a crystalline silicon nitride powder having a small proportion of a needle-like particle or an aggregated particle and being more suitable for a release agent, which is a crystalline silicon powder where D10/D90 is from 0.05 to 0.20, FS/FIO is 22 or more, and the FS/FSO value is from 8 to 30. In the firing the amorphous Si-N(-H)-based compound, if heating is performed at a temperature rising rate of less than 12°C/min in the temperature range from 1,100 to 1,400°C, the crystal nucleus generation density is reduced and nuclear growth proceeds, as a result, FS relative to FTO is not increased and FS/FIO is likely to become small. In addition, the small FS leads to large D10 and because of a low temperature rising rate, crystallization proceeds slowly and the proportion of an aggregated particle decreases to give small D90. D10/D90 tends to be large and in the case of applying such a silicon nitride powder onto a mold, the density of the release layer may be high but when the baking temperature is lowered, the adherence between the release layer and the mold is reduced to deteriorate the releasability of a silicon ingot. On the other hand, if heating is performed at a temperature rising rate exceeding 500°C/min, the proportion of needle-like particles or aggregated particles is increased and D10/D90 becomes less than 0.05. In addition, the possibility for a ceramic-made core tube to be broken by thermal shock rises.

Incidentally, the temperature rising rate during the heating the amorphous Si-N(-H)-based compound for use in the present invention can be set by adjusting the temperature distribution inside the furnace tube of the continuous firing furnace and the transfer rate of the powder. For example, in a rotary kiln, the amorphous SiN(-H)-based compound as the raw material powder is fed into the ceramic-made furnace tube from a feeder provided at the inlet of the furnace tube and transferred to the maximum temperature part at the center of the furnace tube by the rotation and inclination of the furnace tube. The temperature distribution from the furnace tube inlet to the maximum temperature part can be adjusted by the temperature setting of a heater for heating in each zone, and the transfer rate of the raw material powder can be adjusted by the rotation speed and inclination of the furnace tube. When the temperature gradient of the rotary kiln in a temperature range from 1,100 to 1,400°C is increased by adjusting the temperature in each zone of the rotary kiln, the temperature rising rate in the temperature range from 1,100 to 1,400°C in firing the amorphous Si-N(-H)-based compound becomes high. When the inclination angle of the furnace tube in the rotary kiln is increased, the transfer rate of the amorphous Si-N(-H)-based compound in the temperature range from 1,100 to 1,400°C in the firing the amorphous Si-N(-H)-based compound is increased, and the temperature rising rate becomes high. When the rotation speed of the furnace tube is increased, the transfer rate of the amorphous Si-N(-H)-based compound in the temperature range from 1,100 to 1,400°C in the firing the amorphous Si-N(-H)-based compound is increased, and the temperature rising rate becomes high. The material of the ceramic-made furnace tube includes a dense sintered body of silicon carbide, alumina or silicon nitride, and a silicon carbide-made sintered body excellent in the high temperature strength and thermal shock resistance is preferred.

The silicon nitride powder of the present invention is a silicon nitride powder first obtained by firing an amorphous Si-N(-H)-based compound in which the specific surface area is from 300 to 1,200 $m^2/g$ and assuming that the specific surface area is RS ($m^2/g$) and the oxygen content ratio is RO (mass%), RS/RO is 100 or more, at a temperature of 1,400 to 1,700°C, after heating at a temperature rising rate of 12 to 500°C/min in a temperature range from 1,100 to 1,400°C, in a nitrogen-containing inert gas atmosphere or a nitrogen-containing reducing gas atmosphere while flowing the compound in a continuous firing furnace.

In the present invention, it has been found that although a powder obtained using a raw material with small RS/RO is conventionally not suitable for a release agent, when the compound is fired by adjusting the temperature rising rate in a specified temperature range to fall in a specified range, in addition to by flowing the raw material, even if a raw material with small RS/RO is used, a silicon nitride powder suitable for a release agent can be obtained.

In a conventional method of housing an amorphous SiN(-H)-based compound as the raw material in a crucible, etc., and firing the raw material without flowing it in a batch furnace, a pusher furnace, etc., or a conventional method of firing the raw material while flowing it in a continuous firing furnace, as long as it is a method using a raw material with RS/RO of less than 100, a silicon nitride powder containing many needle-like crystals or aggregated particles is formed and therefore, the silicon nitride powder of the present invention cannot be obtained. This is described below.

In the case of the conventional method of firing the raw material without flowing it, compared with the method of firing the raw material while flowing it, as described below, an amorphous Si-N(-H)-based compound having a relatively large oxygen amount needs to be used so as to increase the specific surface area and therefore, in particular, the proportion of internal oxygen relative to the specific surface area of the silicon nitride powder obtained cannot be reduced. In the method of housing an amorphous Si-N(-H)-based compound as the raw material in a crucible, etc., and firing the raw material without flowing it in a batch furnace, a pusher furnace, etc., since it is difficult as described above to efficiently dissipate the heat of crystallization, the temperature of the silicon nitride powder in the crystallization process locally rises abruptly due to the heat of crystallization, and the produced silicon nitride powder is likely to be partially or wholly crystallized as a columnar crystal or crystallized as a needle-like crystal and an aggregated particle. In this case, the silicon nitride powder can be prevented from crystallization as a columnar crystal or crystallization as a needle-like crystal and aggregated particles by forming the amorphous Si-N(-H)-based compound into a granular shape to improve the heat transfer and setting the temperature rise rate low at the time of firing (Patent Document 4), but the specific surface area of the obtained silicon nitride powder becomes small due to the low temperature rising rate. Because, when the temperature rising rate during firing is low, compared with a high temperature rising rate, nucleus growth proceeds, though the nucleation temperature of silicon nitride is not changed, and the silicon nitride particles become large. In order to obtain a silicon nitride powder having a large specific surface area at a low temperature rising rate, an amorphous Si-N(-H)-based compound having a small specific surface area and a high oxygen content ratio needs to be used so as to increase the degree of supersaturation. The reason therefor is considered as follows.

In the step of firing an amorphous Si-N(-H)-based compound, a Si source gas species (particularly SiO) evolved from the surface of amorphous Si-N(-H)-based compound promotes nucleation and grain growth of silicon nitride. When the specific surface area of the amorphous Si-N(-H)-based compound is small, the vapor pressure of SiO is low at a low temperature of the firing step, and the SiO concentration increases at a high temperature, as a result, the degree of supersaturation near the particle is elevated at a high temperature, causing nucleation of silicon nitride. When nucleation occurs at a high temperature, notwithstanding a low temperature rising rate, the number of nuclei generated is increased and the growth proceeds in a short time, as a result, the silicon nitride particles become small. Furthermore, when the oxygen content ratio of the amorphous Si-N(-H)-based compound is high, the nucleation temperature becomes high, and similarly to the case where the degree of supersaturation near the particle during nucleation is high and the specific surface area of the amorphous SiN(-H)-based compound is small, the silicon nitride particles are considered to become small. Accordingly, for obtaining a silicon nitride powder having a specific surface area suitable for a release agent by the conventional method of firing the amorphous Si-N(-H)-based compound without flowing it, where firing at a low temperature rising rate is required, an amorphous Si-N(-H)-based compound having a small specific surface area and at the same time, having a large oxygen amount must be used.

However, when an amorphous Si-N(-H)-based compound having a high oxygen content ratio is used as the raw material, in the obtained silicon nitride powder, the content ratio of oxygen inside a particle is high and the proportion of needle-like particles or coarse aggregated particles becomes large. Accordingly, in the silicon nitride powder having a specific surface area suitable for a release agent, which is obtained by the conventional method of firing the amorphous Si-N(-H)-based compound without flowing it, the content ratio of oxygen inside a particle becomes high, compared with a silicon nitride powder having the same specific surface area, which is obtained by firing the raw material while flowing it, and a release layer allowing good releasability of a polycrystalline silicon ingot cannot be formed.

As described above, in the conventional method of firing the raw material without flowing it, the content ratio of internal oxygen relative to the specific surface area of the obtained silicon nitride powder becomes high, compared with the method of firing the raw material while flowing it, and therefore, it is difficult to obtain a silicon nitride powder having large FS/FIO, as a result, the silicon nitride powder of the present invention cannot be obtained.

Even in the method of firing the raw material while flowing it, the silicon nitride powder of the present invention cannot be obtained by a production method of a silicon nitride powder, where the temperature rising rate in a temperature range from 1,100 to 1,400°C during firing is less than 12°C/min. The silicon nitride powder of the present invention is a novel silicon nitride powder suitable for a release agent of a polycrystalline silicon ingot casting mold, which is obtained by firing an amorphous Si-N(-H)-based compound with RS/RO of not less than a specified value while flowing it, after heating at a temperature rising rate of 12 to 500°C/min in a temperature range from 1,100 to 1,400°C, and in which FS/FSO is in a specified range, FS/FIO is large, the proportion of needle-like particles or aggregated particles is small, and the particle size distribution is in a specified range. Furthermore, the silicon nitride powder of the present invention obtained by firing an amorphous Si-N(-H)-based compound with RS/RO of not less than a specified value while flowing it, after heating at a temperature rising rate of 15 to 500°C/min in a temperature range from 1,000 to 1,400°C, is a silicon nitride powder suitable particularly for a release agent of a polycrystalline silicon ingot casting mold.

In the case where an amorphous Si-N(-H)-based compound with RS/RO of 100 to 300 is used as the raw material, in the method of housing the amorphous Si-N(-H)-based compound as the raw material in a crucible, etc., and firing the raw material without flowing it in a batch furnace, a pusher furnace, etc., the number of nuclei generated is decreased due to a low temperature rising rate, and the concentration of SiO gas promoting grain growth in the crystallization process is increased, leading to production of needle-like particles grown into longer and coarser particles or coarse aggregated particles. Accordingly, FS/FIO is small, and D10/D90 becomes large. If a silicon nitride powder composed of such particles is applied onto a mold and then baked, the adherence of a release layer to the mold is deteriorated and the density of the release layer is also reduced. On the other hand, in the method of the present invention of firing the raw material while flowing it in a continuous furnace by setting the temperature rising rate in the crystallization process high, when an amorphous Si-N(-H)-based compound with RS/RO of 100 to 300 is used, the number of nuclei generated is increased owing to a high crystallization rate, and the SiO gas per one crystal nucleus is decreased and is insufficient for grain growth, as a result, silicon nitride particles are kept from growing into needle-like or coarse particles. In turn, FS/FIO is large, FS/FSO and D10/D90 fall in the specified ranges of the present invention, the release layer, even when baked at a low temperature, has high density and exhibits high adherence, and a release failure of a silicon ingot is less likely to occur.

In the method of housing an amorphous Si-N(-H)-based compound in a crucible, etc., and firing the raw material without flowing it in a batch furnace, a pusher furnace, etc., since the temperature rising rate during firing is low, when an amorphous Si-N(-H)-based compound with RS/RO of more than 300 is used as the raw material, the particles constituting the obtained silicon nitride powder are coarsened and at the same time, the rate of production of needle-like particles or aggregated particles decreases. In the obtained silicon nitride powder, FS/FIO becomes low and D10/D90 exceeds 0.20, leading to poor adherence of the release layer to the mold. On the other hand, in the method of the present invention of firing the raw material while flowing it in a continuous furnace by setting the temperature rising rate in the crystallization process high, when an amorphous Si-N(-H)-based compound with RS/RO of more than 300 is used, the number of nuclei generated is increased, and the SiO gas per one crystal nucleus is decreased, so that a granular silicon nitride powder having large FS and large FS/FIO can be obtained. Even when the release layer is baked at a low temperature, not only the adherence between the release layer and the mold is high but also the density of the release layer itself is high, and a release layer allowing high releasability of a polycrystalline silicon ingot can be formed.

The silicon nitride powder of the present invention is a silicon nitride powder having optimal specific surface area, FS/FSO, FS/FIO and particle size for a release agent for polycrystalline silicon casting, which can be first obtained by the production method of the present invention developed by finding that when the raw material is fired by adjusting the temperature rising rate in a specified temperature range, in addition to by flowing it, even if a raw material with a high oxygen content ratio relative to the specific surface layer is used, a silicon nitride powder reduced in the proportion of needle-like crystals or aggregated particle crystals and suitable for a release agent can be obtained and further by finding that the content ratio of internal oxygen relative to the specific surface area of the silicon nitride powder can be reduced.

In the production of the silicon nitride powder of the present invention, when a continuous firing furnace such as rotary kiln equipped with an SiC-made furnace tube is used for the firing of an amorphous Si-N(-H)-based compound, a silicon nitride powder having a very small Fe (iron) content of, specifically, 10 ppm or less can be obtained. Furthermore, in this case, a graphite crucible is not used for the firing and therefore, a silicon nitride powder having a C (carbon) content of 0.05 to 0.07 mass% can be obtained. When a silicon nitride powder having small Fe (iron) and C (carbon) contents is used, a mold having formed thereon a release layer with small Fe (iron) and C (carbon) contents can be produced, and when this mold is used, a high-quality polycrystalline silicon ingot having small Fe (iron) and C (carbon) contents and capable of providing a substrate with high photoelectric conversion efficiency can be produced.

Incidentally, the above-described pusher furnace is a firing furnace equipped with a furnace chamber capable of controlling the temperature and atmosphere conditions, where a plurality of trays each having thereon a crucible, etc., housing a ceramic raw material as a to-be-fired material are pushed sequentially into a furnace by a pusher mechanism and transported to thereby perform firing of the to-be-fired material.

The polycrystalline silicon ingot casting mold, the silicon nitride powder-containing slurry for a release agent of the mold, and the method for manufacturing the mold, of the present invention, are described below.

The polycrystalline silicon ingot casting mold according to the present invention is manufactured by a manufacturing method including a slurry forming step of mixing the silicon nitride powder of the present invention, i.e., "a silicon nitride powder where the specific surface area is from 5 to 40 $m^2/g$; assuming that the content ratio of oxygen present in a particle surface is FSO (mass%), the content ratio of oxygen present inside a particle is FIO (mass%), and the specific surface area is FS ($m^2/g$), FS/FSO is from 8 to 30 and FS/FIO is 22 or more; and the ratio D10/D90 between the 10 vol% diameter D10 and the 90 vol% diameter D90 in the measurement of a particle size distribution on a volume basis by a laser diffraction particle size distribution meter is from 0.05 to 0.20", with water to form a slurry, a slurry applying step of coating a mold surface with the obtained slurry, a slurry drying step of drying the slurry applied onto the mold surface, and a heating step of heating the mold after the slurry drying step.

The slurry forming step in the method for manufacturing the polycrystalline silicon ingot casting mold of the present invention is a step of mixing the silicon nitride powder of the present invention with water to form a slurry. When the silicon nitride powder of the present invention is used, a release layer having sufficiently high adherence to a mold or sufficiently high strength can be formed even without using a binder and therefore, the slurry forming step according to the present invention is preferably a step of forming slurry by mixing the silicon nitride powder with water without adding a binder. In addition, the silicon nitride powder-containing slurry for a release agent of a polycrystalline silicon ingot casting mold of the present invention is preferably a slurry obtained by mixing the silicon nitride powder with water without adding a binder.

The silicon nitride powder-containing slurry used in the slurry forming step in the method for manufacturing the polycrystalline silicon ingot casting mold of the present invention is a slurry obtained by mixing the silicon nitride powder of the present invention with water and is obtained by putting a predetermined amount of the silicon nitride powder together with distilled water in a vessel, filling the vessel with silicon nitride-made balls, and mixing the contents for a predetermined time by means of a mixing pulverizer such as vibration mill, ball mill and paint shaker, or when balls are not used, by means of a stirrer with blades such as paddle blade, or a high-speed rotation/revolution stirrer.

The silicon nitride powder above is in a lightly aggregated particle state and when the powder is directly dispersed to form a slurry, the slurry viscosity is likely to become high. Therefore, a treatment of lightly disassociating the powder is performed. In the step of lightly disassociating the aggregated particles, the media used for disassociating is a material obtained by coating a metal ball with a resin, or a silicon nitride sintered body. The amount of a metal impurity mixed is very small and stays at about several ppm, and a powder suitable for a raw material of a release agent for a polycrystalline silicon ingot casting crucible is provided.

In the method for manufacturing a polycrystalline silicon ingot casting mold having a release layer according to the present invention, the slurry applying step is a step of coating a mold surface with the above-described silicon nitride powder-containing slurry while keeping the fluidity of particles. The silicon nitride-containing slurry is applied to coat the inner surface of a mold, i.e., a quartz crucible having a porosity of 16 to 26%, with a release agent by using a spray, a brush or a spatula, and the applied slurry preferably has such fluidity as not inhibiting the movement of a silicon nitride particle within the release layer formed and not dripping off from the mold.

The silicon nitride powder-containing slurry applied onto a mold is pulled toward the vicinity of the mold surface due to absorption by a capillary phenomenon of pores in the mold, and a release layer is formed in the inward side (mold side) of the release layer. Accordingly, when the viscosity of the silicon nitride powder-containing slurry is 500 P (poise) or more, the transfer rate of silicon nitride particles within the release layer formed by applying the silicon nitride powder-containing slurry is low, and when the viscosity of the silicon nitride powder-containing slurry is 1.5 cP (centipoise) or less, the release layer formed by applying the silicon nitride powder-containing slurry is likely to drip, failing in holding the release layer. Therefore, the slurry viscosity must be adjusted to keep the fluidity of particles and not to allow dripping.

The drying step in the method for manufacturing the polycrystalline silicon ingot casting mold of the present invention may be sufficient if it is a step of removing water from the silicon nitride powder-containing slurry applied onto the mold surface, i.e., drying the silicon nitride powder-containing slurry applied onto the mold surface, and this step is, for example, a step of drying the slurry at 30 to 120°C.

The heat treatment step in the method for manufacturing the polycrystalline silicon ingot casting mold having a release layer according to the present invention is a step of heat-treating the mold coated with the silicon nitride powder-containing slurry in an oxygen-containing atmosphere. When the silicon nitride powder of the present invention is used, a release layer having sufficiently high adherence to a mold or sufficiently high strength can be formed by a heat treatment at a low temperature of 400°C even without using an additive such as binder or without performing an oxidation treatment of the silicon nitride powder. When the heat treatment temperature is from 400 to 1,200°C, a release layer having high adherence to a mold and high strength can be formed. If the heat treatment temperature exceeds 1,200°C, the release layer is excessively oxidized, making it difficult to form a release layer with high releasability, and if the temperature is less than 400°C, the release layer may not be sufficiently increased in the adherence to a mold or the strength.

The heat treatment temperature in the heat treatment step is preferably from 400 to 800°C. Because, when heat treatment temperature is from 400 to 800°C, a hot air circulating furnace having high heating efficiency can be used in place of a general electric furnace causing natural convection of an atmosphere gas, which is usually used in the heat treatment for baking a release layer, and therefore, the cost and time required for the heat treatment (baking of the release layer) can be reduced. When the heat treatment temperature is low, the cost can be more reduced. For this reason, the heat treatment temperature is more preferably from 400 to 500°C. When the silicon nitride powder of the present invention is used, a release layer having sufficiently high adherence to a mold or sufficiently high strength can be formed by a heat treatment at such a low temperature even without using an additive such as binder or without performing an oxidation treatment of the silicon nitride powder.

The polycrystalline silicon ingot casting mold manufactured by the method for manufacturing a polycrystalline silicon ingot casting mold having a release layer according to the present invention has, on its inner surface, a release layer composed of the silicon nitride powder of the present invention, i.e., a silicon nitride powder where the specific surface area is from 5 to 40 m$^2$/g; assuming that the content ratio of oxygen present in a particle surface is FSO (mass%), the content ratio of oxygen present inside a particle is FIO (mass%), and the specific surface area is FS (m$^2$/g), FS/FSO is from 8 to 30 and FS/FIO is 22 or more; and the ratio D10/D90 between the 10 vol% diameter D10 and the 90 vol% diameter D90 in the measurement of a particle size distribution on a volume basis by a laser diffraction particle size distribution meter is from 0.05 to 0.20.

This release layer is a dense and firm release layer and can be formed, as long as the atmosphere is an oxygen-containing atmosphere, by a heat treatment at a low temperature of 400°C even without using an additive such as binder or without treating the surface of the silicon nitride powder in the post-process after the production of the silicon nitride powder. Use of a polycrystalline silicon ingot casting mold having such a release layer makes it possible to prevent permeation of a silicon melt into the wall surface inside the mold, greatly improve the releasability between a mold and a polycrystalline silicon ingot, suppress occurrence of chipping or breakage at the time of release of a polycrystalline silicon ingot, and furthermore, because of almost no mixing of a contaminant from the release layer into a polycrystalline silicon ingot, obtain a high-purity polycrystalline silicon ingot having high photoelectric conversion efficiency in high yield. The material of the mold is not particularly limited but, for example, a quartz crucible or a quartz crucible internally mounted on a graphite crucible is usually used.

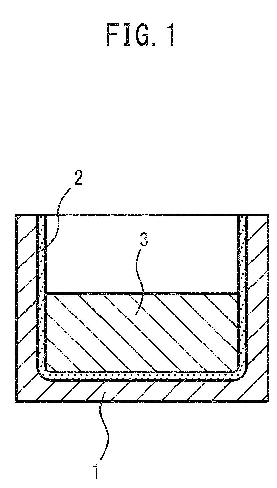

Fig. 1 schematically shows how the silicon nitride powder for a release agent of the present invention is applied onto a polycrystalline silicon ingot casting mold to form a release layer. In Fig. 1, reference numeral 1 is a polycrystalline silicon ingot casting mold, and 2 is a release layer formed using the silicon nitride powder for a release agent. In this example, the mold 1 is a mold having an outer dimension of 6 cm square, a height of 4.5 cm, an inner dimension of 5 cm square, a 4 cm-deep hole-shaped casting space, and a wall thickness of 5 mm. The polycrystalline silicon ingot casting mold 1 is, for example, a quartz-made crucible, and the method for forming the release layer 2 is described above. The method for manufacturing a polycrystalline silicon ingot by using the mold 1 having formed thereon the release layer 2 may be fundamentally the same as the conventional method for manufacturing a polycrystalline silicon ingot except that the release layer is formed by applying the silicon nitride powder for a release agent of the present invention. For example, the mold 1 having formed thereon the release layer 2 is kept in a state of being heated at a temperature equal to or slightly lower than the melting point of silicon in an inert atmosphere, and a previously prepared silicon melt 3 is poured in the mold 1. Alternatively, a silicon raw material may be put in the mold 1 and melted by heating. If desired, a dopant may be incorporated into the silicon melt. The silicon melt is gradually solidified unidirectionally from the bottom of the mold by lowering the temperature of the mold 1 and after complete solidification, a polycrystalline silicon ingot is obtained. When the polycrystalline silicon ingot 3 is formed, the polycrystalline silicon ingot is taken out from the mold 1. The release layer 2 remains on the inner side of the mold 1 after taking out the polycrystalline silicon ingot. When the silicon nitride powder for a release agent of the present invention is used, the adherence of the release layer 2 to the mold 1 and the releasability of the polycrystalline silicon ingot are excellent. When the adherence of the release layer 2 to the mold 1 and the releasability of the polycrystalline silicon ingot are excellent, the effect of restraining and preventing a component constituting the release layer and the mold from mixing into the ingot from the release layer and the mold is excellent.

Respective parameters of the silicon nitride powder according to the present invention and the release layer formed using the silicon nitride powder can be measured by the following methods.

(Method for Analyzing Composition of Amorphous Si-N(-H)-Based Compound)

The silicon (Si) content of the amorphous Si-N(-H)-based compound was measured by ICP emission analysis in conformity with "7. Total Silicon Quantification Method" of "JIS R1603 Chemical Analysis Method of Silicon Nitride Fine Powder for Fine Ceramics", the nitrogen (N) content was measured by a water vapor distillation/separation-neutralization titration method in conformity with "8. Total Nitrogen Quantification Method" of "JIS R1603 Chemical Analysis Method of Silicon Nitride Fine Powder for Fine Ceramics", and the oxygen (O) content was measured, as described above, by the inert gas fusion-carbon dioxide infrared absorption method in conformity with the oxygen quantification method of JIS R1603-10. Here, in order to suppress oxidation of the amorphous SiN(-H)-based compound, the atmosphere during sample storage until immediately before a pretreatment of the sample for measurement was set to a nitrogen atmosphere in the case of measuring the silicon/nitrogen contents by ICP emission analysis or a water vapor distillation/separation-neutralization titration method, and the atmosphere during sample storage until immediately before measurement and during measurement was set to a nitrogen atmosphere in the case of measuring the oxygen content by an infrared absorption method. The hydrogen (H) content of the amorphous Si-N(-H)-based compound was determined by calculating it, based on a stoichiometric composition, as a residue after removing silicon (Si), nitrogen (N) and oxygen (O) contents from the total amount of the amorphous Si-N(-H)-based compound. From the values obtained, the ratio of Si, N and H was obtained, and the composition formula of the amorphous Si-N(-H)-based compound was determined.

(Methods for Measuring Specific Surface Area and Particle Size Distribution)

The specific surface areas of the silicon nitride powder and amorphous Si-N(-H)-based compound according to the present invention were measured by a nitrogen adsorption BET one-point method using Macsorb manufactured by Mountech, and the particle size distribution was measured by a laser diffraction/scattering particle diameter distribution analyzer (LA-910, manufactured by Horiba, Ltd.)

(Method for Measuring Surface Oxygen Content Ratio and Internal Oxygen Content Ratio of Silicon Nitride Powder)

The surface oxygen content ratio and internal oxygen content ratio of the silicon nitride powder of the present invention can be measured by the following method. First, the silicon nitride powder is weighed, and FTO (mass %) as a content ratio of all oxygen that is a total of surface oxygen and internal oxygen of the silicon nitride powder, is measured by an inert gas fusion-carbon dioxide infrared absorption method (Model TC-136, manufactured by LECO) in conformity with "10. Oxygen Quantification Method" of "JIS R1603 Chemical Analysis Method of Silicon Nitride Fine Powder for Fine Ceramics". Next, the weighed silicon nitride powder is subjected to mixing of the silicon nitride powder with an aqueous hydrofluoric acid solution such that hydrogen fluoride accounts for 5 parts by mass per part by mass of the silicon nitride powder, and the mixture is stirred at room temperature (25°C) for 3 hours and suction-filtered. The obtained solid material is vacuum-dried at 120°C for 1 hour, and the weight of this hydrofluoric acid-treated powder is measured. The oxygen content of the obtained powder is measured by the same infrared absorption method as in the FSO measurement above, and this value is taken as FIO before correction (mass% relative to the hydrofluoric acid-treated powder). The content ratio FIO (mass% relative to the silicon nitride powder) of internal oxygen is calculated according to the following formula (3). The content ratio FSO (mass% relative to the silicon nitride powder) of surface oxygen is calculated according to the following formula (4). From the X-ray photoelectron spectroscopy depth profile for the powder before and after the hydrofluoric acid treatment and the change in weight of the powder between before and after the treatment, the surface oxygen content ratio determined above was confirmed to be the surface oxygen content obtained by measuring the content ratio of oxygen present in a range from the particle surface including the amorphous oxide layer existing on the particle surface to approximately 3 nm beneath the particle surface.

$$\text{FIO (mass\%)} = (\text{weight of hydrofluoric acid-treated}$$
$$\text{powder (g)/weight of silicon nitride powder (g))} \times \text{FIO}$$
$$\text{before correction (mass\%)} \qquad\qquad (3)$$

$$\text{FSO (mass\%)} = \text{FTO (mass\%)} - \text{FIO (mass\%)} \qquad (4)$$

(Method for Measuring Oxygen Content Ratios of Silicon Nitride Powder and Amorphous Si-N(-H)-Based Compound)

The oxygen content ratio of the silicon nitride powder according to the present invention was measured by an inert gas fusion-carbon dioxide infrared absorption method (Model TC-136, manufactured by LECO) in conformity with "10. Oxygen Quantification Method" of "JIS R1603 Chemical Analysis Method of Silicon Nitride Fine Powder for Fine Ceramics".

The oxygen content ratio of the amorphous Si-N(-H)-based compound according to the present invention was also measured, as with the silicon nitride powder, by an inert gas fusion-carbon dioxide infrared absorption method (Model TC-136, manufactured by LECO) in conformity with "10. Oxygen Quantification Method" of "JIS R1603 Chemical Analysis Method of Silicon Nitride Fine Powder for Fine Ceramics", but in order to suppress oxidation of the amorphous Si-N(-H)-based compound, the atmosphere during sample storage until immediately before measurement and during measurement was set to a nitrogen atmosphere.

(Method for Measuring Crystallization Degree)

The accurately weighed silicon nitride powder was added to an aqueous 0.5 N NaOH solution and boiled by heating. The $NH_3$ gas evolved by the decomposition of silicon nitride was absorbed by an aqueous 1% boric acid solution, and the $NH_3$ amount in the absorbing solution was titrated with a 0.1 N sulfuric acid standard solution. The decomposed nitrogen amount was calculated from the $NH_3$ amount in the absorbing solution. The crystallization degree was calculated from the decomposed nitrogen amount and the theoretical nitrogen amount of 39.94% of silicon nitride, according to the following formula (5):

$$\text{Crystallization degree (\%)} = 100 - (\text{decomposed nitrogen}$$
$$\text{amount} \times 100/39.94) \qquad\qquad (5)$$

(Method for Measuring Fe (Iron) Content Ratio of Silicon Nitride Powder)

0.20 g of a silicon nitride powder was put in a hydrofluoric acid+nitric acid mixed decomposition solution and after sealing with a cap, the mixture was heated and decomposed by the irradiation with a microwave and made up to a constant volume with ultrapure water to obtain an analyte solution. Fe (iron) in the analyte solution was quantitatively analyzed by ICP-AES (Model SPS5100) manufactured by SII NanoTehcnology Inc., and the Fe content ratio of the silicon nitride powder was calculated.

(Method for Measuring C (Carbon) Content Ratio of Silicon Nitride Powder)

The total C (carbon) content ratio in the silicon nitride powder according to the present invention was measured by a combustion (resistance heating) infrared absorption method (Model IR-412, manufactured by LECO) in conformity with "8. Total Carbon Quantification Method" of "JIS R1616 Chemical Analysis Method of Silicon Nitride Fine Powder for Fine Ceramics".

(Evaluation Method of Polycrystalline Silicon Ingot Casting Mold)

The polycrystalline silicon ingot casting mold of the present invention was evaluated for the releasability of a polycrystalline silicon ingot and the adherence of the release layer to the mold after the manufacture of a polycrystalline silicon ingot, by the methods described below.

The releasability of a polycrystalline silicon ingot was evaluated as follows. The releasability was rated A when a polycrystalline silicon ingot can be released from the mold without fracturing the mold and impregnation of silicon into the release layer cannot be confirmed with an eye at all, rated B when a polycrystalline silicon ingot can be released from the mold without fracturing the mold and impregnation of silicon into the mold cannot be confirmed with an eye but impregnation of silicon into the release layer can be confirmed with an eye, and rated C when a polycrystalline silicon ingot is anchored to the mold and cannot be released without fracturing the mold (in this case, silicon is impregnated into the mold).

The adherence of the release layer to the mold after the manufacture of a polycrystalline silicon ingot was evaluated as follows. The adherence was rated A when separation of the release layer cannot be confirmed with an eye at all after the release of a polycrystalline silicon ingot, rated B when part of the release layer on the mold side surface or mold bottom surface is separated to expose the mold surface, and rated C when the release layer on the entire surface of at least either the mold side surface or the mold bottom surface is separated to expose the mold surface. In addition, when a polycrystalline silicon ingot cannot be released without fracturing the mold, the polycrystalline silicon ingot was removed from the mold by fracturing the mold by means of a hummer, and the adherence of the release layer was evaluated in the same manner as in the case where a polycrystalline silicon ingot can be released from the mold without fracturing the mold.

(Method for Measuring Silicon Nitride Density of Release Layer Cross-Section)

The bottom of the mold after the manufacture of a polycrystalline silicon ingot was cut so that the release layer cross-section can be observed, and the mold including the cut release layer was embedded with an epoxy resin and polished to enable observation of the release layer cross-section. The release layer cross-section was observed by a field-emission scanning electron microscope (JSM-700F, manufactured by JEOL Ltd.), and an SEM image of the release layer cross-section was photographed. In the obtained SEM image at a magnification of 2,000 times, the relative area ratio of the silicon nitride particles to the release layer cross-section selected not to include the mold cross-section was computed using an image analysis software, Win Roof Ver. 5.6, and the obtained value was taken as the silicon nitride density of the release layer cross-section.

EXAMPLES

The present invention is described in greater detail below by referring to specific examples.

(Example 1)

The silicon nitride powder for a release agent of a polycrystalline silicon ingot casting mold of Example 1 was prepared as follows.

First, a toluene solution having a silicon tetrachloride concentration of 30 vol% was reacted with liquid ammonia, and the reaction solution was washed with liquid ammonia and dried to produce a silicon diimide powder. Subsequently, the obtained silicon diimide powder was fed to a rotary kiln at a rate of 30 kg/hour, and the silicon diimide powder fed was decomposed by heating at a thermal decomposition temperature of 950°C, where the gas introduced at the time of thermal decomposition was an air-nitrogen mixed gas having an oxygen concentration of 1 vol% and the flow rate of the gas was 300 liter/hour per 1 kg of the silicon diimide powder, to obtain an amorphous Si-N(-H)-based compound having, as shown in Table 1, a specific surface area RS of 450 $m^2$/g, an oxygen content ratio RO of 0.73 mass%, and RS/RO of 616.

The obtained amorphous Si-N(-H)-based compound was disassociated using a continuous vibration mill filled with balls of silicon nitride sintered body until reaching a state of not containing coarse aggregated particles with a particle diameter of 50 $\mu$m or more. The particle diameter as used herein is a particle diameter according to the volumetric particle size distribution as measured by laser diffraction scattering method. The disassociated amorphous Si-N(-H)-based compound was compacted or shaped into an almond shape of from 6 mm (thickness) $\times$ 8 mm (short axis diameter) $\times$ 12 mm (long axis diameter) to 8 mm (thickness) $\times$ 12 mm (short axis diameter) $\times$ 18 mm (long axis diameter) in a nitrogen atmosphere by using Briquette Machine Model BGS-IV manufactured by SINTOKOGIO, Ltd.

The obtained almond-shaped molded product of the amorphous Si-N(-H)-based compound was fed to a rotary kiln equipped with an SiC-made furnace tube manufactured by Motoyama K.K. and fired. In the SiC-made furnace tube of the rotary kiln, a heating zone having a total length of 1,050 mm and being divided into six equal parts was provided, and at the time of firing, the temperature was controlled such that the temperature near the outer wall of the furnace tube becomes 1,100-1,210-1,320-1,500-1,500-1,500°C in respective central parts of first to sixth zones provided from the end on the raw material inlet side toward the fired product discharge side of the heating zone. The furnace tube inclined by 2° from the horizontal direction was rotated at a rotation speed of 2 rpm and while flowing a nitrogen gas from the inlet side at a flow rate of 8 liter/min, the almond-shaped molded product of the amorphous Si-N(-H)-based compound was fed at 3 kg/hour and thereby fired at a firing temperature of 1,500°C with a temperature rising rate of 40°C/min in a temperature range from 1,100 to 1,500°C to obtain a silicon nitride powder.

The silicon nitride powder taken out after firing was lightly disassociated using a continuous vibration mill filled with balls made of a silicon nitride sintered body to obtain the silicon nitride powder of Example 1 shown in Table 1, where the surface area FS is 21.6 m$^2$/g, the internal oxygen content ratio FIO is 0.52 mass%, the surface oxygen content ratio FSO is 0.88 mass%, FS/FIO is 41.5, FS/FSO is 24.5, and D10/D90 indicative of the particle size distribution is 0.17.

Next, the obtained silicon nitride powder of Example 1 was housed in a polyethylene-made container that can be sealed with a cap, and water was added to allow silicon nitride to account for 20 mass% in mass ratio. Furthermore, silicon nitride sintered body-made balls having a diameter of about 10 mm and having a mass two times the total mass of the silicon nitride powder and the water were charged into the container, and the container was loaded in a vibration mill having a vibration width of 5 mm and a vibration speed of 1,780 cpm for 5 minutes to mix the silicon nitride powder and water, whereby the silicon nitride powder-containing slurry for a release agent of Example 1 was produced.

The obtained silicon nitride powder-containing slurry for a release agent of Example 1 was spray-applied onto the inner surface of a quarts crucible of 5 cm square × 4 cm (depth) having a porosity of 16% and being previously heated to 40°C, and dried at 40°C. These spray-applying and drying were repeated to form a release layer having an appropriate thickness and, for completing the drying of the release layer applied, hot air drying at 40°C was further performed for 15 hours. The quartz crucible after the drying of the release layer was heat-treated using a box-type electric furnace and by lowering the temperature, a release layer of silicon nitride was baked over the inner surface of the quartz crucible to obtain the polycrystalline silicon ingot casting mold of Example 1. The heat treatment above was performed at 400°C in the air atmosphere, where the temperature rise time to 400°C was 4 hours and the holding time at 400°C was 4 hours. The thickness of the release layer of the polycrystalline silicon ingot casting mold of Example 1 was 212 µm in terms of an average from 5 point measurements.

The obtained mold of Example 1 was filled with 75 g of Si granules having a purity of 99.999% and a maximum length of 2 to 5 mm and heated using a box-type electric furnace to melt the Si granules in the mold, and the molten silicon was solidified by lowering the temperature to obtain a polycrystalline silicon ingot. This treatment was performed in an Ar stream at an atmospheric pressure by raising the temperature to 1,000°C over 3 hours, raising the temperature from 1,000°C to 1,450°C over 3 hours, holding a temperature of 1,450°C for 4 hours, and then lowering the temperature.

After lowering the temperature, the mold was taken out from the electric furnace, a polycrystalline silicon ingot was taken out (released) from the mold, and the polycrystalline silicon ingot casting mold having formed thereon a release layer was evaluated by the method described in (Evaluation Method of Polycrystalline Silicon Ingot Casting Mold). In addition, the relative area (area density) occupied by silicon nitride in the release layer cross-section was measured by the method described in (Method for Measuring Silicon Nitride Density of Release Layer Cross-Section).

The results of these are shown in Table 1. In the case of using the mold of Example 1, a polycrystalline silicon ingot could be released from the mold without fracturing the mold, impregnation of silicon into the release layer was not confirmed with an eye at all, and separation of the release layer after the release of a polycrystalline silicon ingot was not confirmed with an eye at all. The area density of the release layer as measured from the SEM image of the release layer cross-section was 76%.

(Examples 2 to 20)

The silicon nitride powders of Examples 2 to 20 were produced as follows.

The same silicon diimide powder as in Example 1 was heated and decomposed using the same rotary kiln as in Example 1. The silicon diimide powder was heated and decomposed by adjusting the silicon diimide powder feed rate in the range of 25 to 35 kg/hour, the thermal decomposition temperature in the range of 500 to 1,170°C, the oxygen concentration of the air-nitrogen mixed gas introduced at the time of thermal decomposition in the range of 0.4 to 2 vol%, and the gas flow rate in the range of 10 to 2,000 liter/hour per 1 kg of the silicon diimide powder, and the amorphous Si-N(-H)-based compounds for use in Examples 2 to 20 shown in Table 1 were thereby produced.

Each of the obtained amorphous Si-N(-H)-based compounds shown in Table 1 was disassociated by the same method as in Example 1 and compacted or shaped into the same almond shape as in Example 1 by the same method as in Example 1.

The almond-shaped amorphous Si-N(-H)-based compound molded products obtained were fired in the same nitrogen gas stream as in Example 1 by using the same rotary kiln as in Example 1. The maximum temperature and temperature rising rate during firing of each Example were controlled to have the numerical values shown in Table 1 by adjusting the first zone of the rotary kiln in the range of "1,100 to 1,200°C", the second zone in the range of "1,210 to 1,450°C", the third zone in the range of "1,320 to 1,550°C", the fourth zone in the range of "1,415 to 1,650°C", the fifth zone in the range of "1,415 to 1,650°C", the sixth zone in the range of "1,415 to 1,650°C", the furnace tube inclination angle in the range of 2 to 3°, and the furnace tube rotation speed in the range of 1.5 to 4.5 rpm. In addition, according to the required production volume, the feed rate of the amorphous Si-N(-H)-based compound molded product was adjusted in the range of 1 to 15 kg/hour. The fired silicon nitride powders taken out were lightly disassociated by the same method as in Example 1 to obtain the silicon nitride powders of Examples 2 to 20 shown in Table 1.

Subsequently, using the obtained silicon nitride powders of Examples 2 to 20, the silicon nitride powder-containing slurries for a release agent of Examples 2 to 20 were produced by the same method as in Example 1. Each of the obtained silicon nitride powder-containing slurries for a release agent of Examples 2 to 20 was applied onto the inner surface of the same quartz crucible as in Example 1 by the same method as in Example 1 and dried by the same method as in Example 1, and a release layer was baked over the inner surface of the quartz crucible by the same method as in Example 1 to obtain a polycrystalline silicon ingot casting mold. In all of the obtained polycrystalline silicon ingot casting molds of Examples 2 to 20, the thickness of the release layer was from 150 to 220 μm in terms of an average from 5 point measurements.

Polycrystalline silicon ingots were manufactured by solidifying the molten silicon by the same method as in Example 1 except for using the polycrystalline silicon ingot casting molds of Examples 2 to 20. The release layer was evaluated by the same method as in Example 1, and the results shown in Table 1 were obtained.

In all Examples, a polycrystalline silicon ingot could be released from the mold without fracturing the mold, impregnation of silicon into the release layer was not confirmed with an eye at all, and separation of the release layer after the release of a polycrystalline silicon ingot was not confirmed with an eye at all. In all Examples, the area density of the release layer as measured from the SEM image of the release layer cross-section was 70% or more.

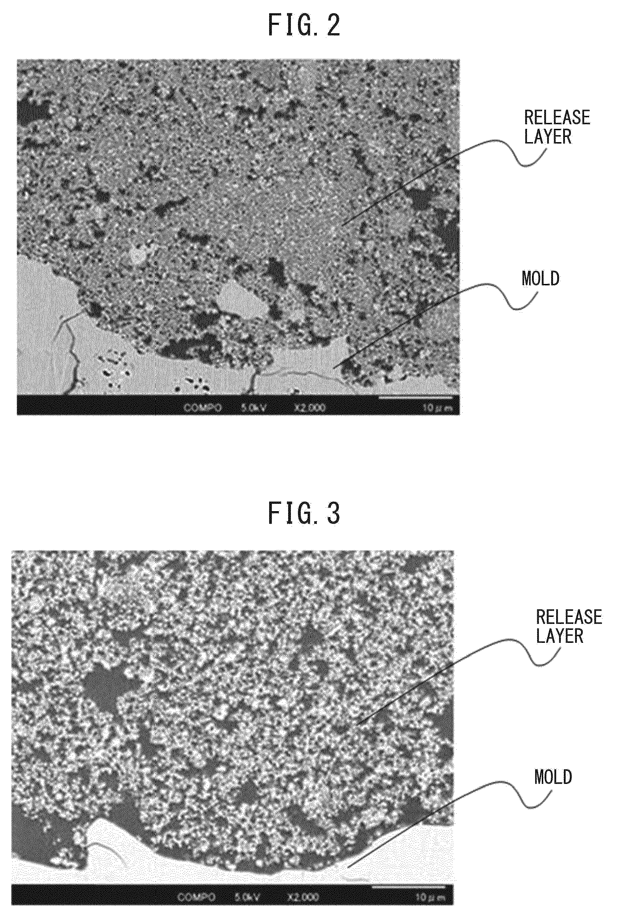

Fig. 2 shows an SEM image of the release layer cross-section of the polycrystalline silicon ingot casting mold of Example 2. Comparing it with the same SEM image according to Comparative Example 13 of Fig. 3, it is seen that in the polycrystalline silicon ingot casting mold of Example 2, a dense release layer could be formed even by low-temperature baking at 400°C. As a result, a high-quality silicon ingot can be obtained at a low cost in high yield while preventing anchoring of a polycrystalline silicon ingot to the mold surface or occurrence of chipping or damage at the time of release of a polycrystalline silicon ingot.

(Comparative Example 1)

The silicon nitride powder of Comparative Example 1 was produced as follows.

The same silicon diimide powder as in Example 1 was fed to the same rotary kiln as in Example 1 at a rate of 25 kg/hour, and the fed silicon diimide powder was heated and decomposed by setting the thermal decomposition temperature to 450°C, using an air-nitrogen mixed gas having an oxygen concentration of 1 vol% as the gas introduced at the time of thermal decomposition, and setting the gas flow rate to 115 liter/hour per 1 kg of the silicon diimide powder, thereby obtaining the amorphous Si-N(-H)-based compound for use in Comparative Example 1 where as shown in Table 1, the specific surface area RS is 1,220 $m^2$/g, the oxygen content ratio RO is 0.27 mass%, and RS/RO is 4,519.

The obtained amorphous Si-N(-H)-based compound shown in Table 1 was disassociated by the same method as in Example 1 and compacted or shaped into the same almond shape as in Example 1 by the same method as in Example 1.

The almond-shaped amorphous Si-N(-H)-based compound molded product obtained was fired in the same nitrogen gas stream as in Example 1 by using the same rotary kiln as in Example 1. The temperatures in the heating zone of the rotary kiln were set to 1,100-1,250-1,400-1,550-1,550-1,550°C from the end on the raw material inlet side toward the fired product discharge side, and the feed rate of the amorphous Si-N(H)-based compound molded product was adjusted to 2kg/hour, and the residence time was adjusted by setting the furnnace tube inclination angle to 2°, and the furnace tube rotation speed to 2.0 rpm so that the maximum temperature and temperature rising rate during firing can have the numerical values shown in Table 1. The fired silicon nitride powder taken out was lightly disassociated by the same method as in Example 1 to obtain the silicon nitride powder of Comparative Example 1. In the silicon nitride powder of Comparative Example 1, as shown in Table 1, the specific surface area FS was 4.0 $m^2$/g, the internal oxygen content ratio FIO was 0.20 mass%, the surface oxygen content ratio FSO was 0.13 mass%, FS/FIO was 20.0, FS/FSO was 30.8, and D10/D90 indicative of the particle size distribution was 0.24, and thus, this is a silicon nitride powder differing in the FS, FS/FIO, FS/FSO and D10/D90 from the silicon nitride powder of the present invention.

Subsequently, using the obtained silicon nitride powder of Comparative Example 1, the silicon nitride powder-containing slurry for a release agent of Comparative Example 1 was produced by the same method as in Example 1. The obtained silicon nitride powder-containing slurry for a release agent was applied onto the inner surface of the same quartz crucible as in Example 1 by the same method as in Example 1 and dried by the same method as in Example 1, and a release layer was baked over the inner surface of the quartz crucible by the same method as in Example 1 to obtain the polycrystalline silicon ingot casting mold of Comparative Example 1. In this polycrystalline silicon ingot casting mold, the thickness of the release layer was 210 $\mu$m in terms of an average from 5 point measurements.

A polycrystalline silicon ingot was manufacture by solidifying the molten silicon by the same method as in Example 1 except for using the polycrystalline silicon ingot casting mold of Comparative Example 1. The release layer was evaluated by the same method as in Example 1, and the results shown in Table 1 were obtained.

A polycrystalline silicon ingot was anchored to the mold and could not be released and therefore, the polycrystalline silicon ingot was taken out from the mold by fracturing the mold by means of a hammer. It was confirmed that the release layer on the entire surface of the mold bottom surface was separated to expose the mold surface. In addition, the area density of the release layer as measured from the SEM image of the release layer cross-section stayed at 55%.

(Comparative Examples 2 to 12)

The silicon nitride powders of Comparative Examples 2 to 12 were produced as follows.

The same silicon diimide powder as in Example 1 was heated and decomposed using the same rotary kiln as in Example 1. The fed silicon diimide powder was heated and decomposed by adjusting the silicon diimide powder feed rate in the range of 25 to 35 kg/hour, the thermal decomposition temperature in the range of 400 to 1,220°C, the oxygen concentration of the air-nitrogen mixed gas introduced at the time of thermal decomposition in the range of 0.4 to 4 vol%, and the gas flow rate in the range of 40 to 1,040 liter/hour per 1 kg of the silicon diimide powder, and the amorphous Si-N(-H)-based compounds for use in Comparative Examples 2 to 12 shown in Table 1 were thereby produced.

Each of the obtained amorphous Si-N(-H)-based compounds shown in Table 1 was disassociated by the same method as in Example 1 and compacted or shaped into the same almond shape as in Example 1 by the same method as in Example 1.

The almond-shaped amorphous Si-N(-H)-based compound molded products obtained were fired in the same nitrogen gas stream as in Example 1 by using the same rotary kiln as in Example 1. The maximum temperature and temperature rising rate during firing of each Comparative Example were controlled to have the numerical values shown in Table 1 by setting the first zone of the rotary kiln to "1,100°C" and adjusting the second zone in the range of "1,150 to 1,210°C", the third zone in the range of "1,200 to 1,320°C", the fourth zone in the range of "1,250 to 1,650°C", the fifth zone in the range of "1,300 to 1,650°C", the sixth zone in the range of "1,350 to 1,650°C", the furnace tube inclination angle in the range of 1.5 to 4°, and the furnace tube rotation speed in the range of 0.75 to 5.3 rpm. In addition, according to the required production volume, the feed rate of the amorphous Si-N(-H)-based compound molded product was adjusted in the range of 2 to 15 kg/hour. The fired silicon nitride powders taken out were lightly disassociated by the same method as in Example 1 to obtain the silicon nitride powders of Comparative Examples 2 to 12 shown in Table 1, which are different from the silicon nitride powder of the present invention.

Subsequently, using the obtained silicon nitride powders of Comparative Examples 2 to 12, the silicon nitride powder-containing slurries for a release agent of Comparative Examples 2 to 12 were produced by the same method as in Example 1. Each of the obtained silicon nitride powder-containing slurries for a release agent of Comparative Examples 2 to 12 was applied onto the inner surface of the same quartz crucible as in Example 1 by the same method as in Example 1 and dried by the same method as in Example 1, and a release layer was baked over the inner surface of the quartz crucible by the same method as in Example 1 to obtain the polycrystalline silicon ingot casting molds of Comparative Examples 2 to 12. In all of the polycrystalline silicon ingot casting molds of Comparative Examples 2 to 12, the thickness of the release layer was from 150 to 220 $\mu$m in terms of an average from 5 point measurements.

Polycrystalline silicon ingots were manufactured by solidifying the molten silicon by the same method as in Example 1 except for using the polycrystalline silicon ingot casting molds of Comparative Examples 2 to 12. The release layer was evaluated by the same method as in Examples 1 to 20, and the results shown in Table 1 were obtained.

In all Comparative Examples, a mold ensuring that a polycrystalline silicon ingot can be released from the mold without fracturing the mold and impregnation of silicon into the release layer is not confirmed with an eye at all, was not obtained.

(Comparative Example 13)

The silicon nitride powder of Comparative Example 13 was produced as follows.

The same silicon diimide powder as in Example 1 was fed to the same rotary kiln as in Example 1 at a rate of 25 kg/hour, and the fed silicon diimide powder was heated and decomposed by setting the thermal decomposition temperature to 1,150°C, using an air-nitrogen mixed gas having an oxygen concentration of 2 vol% as the gas introduced at the time of thermal decomposition, and setting the gas flow rate to 200 liter/hour per 1 kg of the silicon diimide powder, thereby obtaining the amorphous Si-N(-H)-based compound for use in Comparative Example 13 where as shown in Table 1, the specific surface area RS is 415 m$^2$/g, the oxygen content ratio RO is 0.95 mass%, and RS/RO is 437.

The obtained amorphous Si-N(-H)-based compound shown in Table 1 was disassociated by the same method as in Example 1 and molded into the same almond shape as in Example 1 by the same method as in Example 1.

This almond-shaped amorphous Si-N(-H)-based compound molded product was charged into a graphite-made crucible of which interior is partitioned in a grid pattern, and fired under the following conditions by using a pusher furnace. The temperature was raised from room temperature to 1,100°C over 3 hours, raised from 1,100°C to 1,400°C at a temperature rising rate of 1°C/min, raised from 1,400 to 1,550°C over 2 hours, and held at 1,550°C for 1 hour, followed by cooling. The fired silicon nitride powder taken out was lightly disassociated by the same method as in Example 1 to obtain the silicon nitride powder of Comparative Example 13. In the silicon nitride powder of Comparative Example 13, as shown in Table 1, the specific surface area FS was 11.5 m$^2$/g, the internal oxygen content ratio FIO was 0.77 mass%, the surface oxygen content ratio FSO was 0.45 mass%, FS/FIO was 14.9, FS/FSO was 25.6, and D10/D90 indicative of the particle size distribution was 0.23, and thus, this is a silicon nitride powder differing in the FS/FIO and D10/D90 from the silicon nitride powder of the present invention.

Subsequently, using the obtained silicon nitride powder of Comparative Example 13, the silicon nitride powder-containing slurry for a release agent of Comparative Example 13 was produced by the same method as in Example 1. The obtained silicon nitride powder-containing slurry for a release agent was applied onto the inner surface of the same quartz crucible as in Example 1 by the same method as in Example 1 and dried by the same method as in Examples 1 to 20, and a release layer was baked over the inner surface of the quartz crucible by the same method as in Example 1 to obtain the polycrystalline silicon ingot casting mold of Comparative Example 13. In the polycrystalline silicon ingot casting mold of Comparative Example 13, the thickness of the release layer was 195 μm in terms of an average from 5 point measurements.

A polycrystalline silicon ingot was manufacture by solidifying the molten silicon by the same method as in Example 1 except for using the polycrystalline silicon ingot casting mold of Comparative Example 13. The release layer was evaluated by the same method as in Example 1, and the results shown in Table 1 were obtained.

A polycrystalline silicon ingot was anchored to the mold and could not be released and therefore, the polycrystalline silicon ingot was taken out from the mold by fracturing the mold by means of a hammer. It was confirmed that part of the release layer on the mold side surface was separated to expose the mold surface. In addition, the area density of the release layer as measured from the SEM image of the release layer cross-section stayed at 50%.

Fig. 3 shows an SEM image of the release layer cross-section of the polycrystalline silicon ingot casting mold of Comparative Example 13. Comparing it with the same SEM image according to Example 2 of Fig. 2, it is seen that in the mold of Comparative Example 13, a dense release layer as in Example 2 was not formed by baking at a temperature as low as 400°C.

(Comparative Examples 14 to 16)

The silicon nitride powders of Comparative Examples 14 to 16 were produced as follows.

The same silicon diimide powder as in Example 1 was heated and decomposed using the same rotary kiln as in Example 1. The fed silicon diimide powder was heated and decomposed by adjusting the silicon diimide powder feed rate in the range of 25 to 35 kg/hour, the thermal decomposition temperature in the range of 500 to 1,200°C, the oxygen concentration of the air-nitrogen mixed gas introduced at the time of thermal decomposition to 2 vol%, and the gas flow rate in the range of 125 to 240 liter/hour per 1 kg of the silicon diimide powder, and the amorphous Si-N(-H)-based compounds for use in Comparative Examples 14 to 16 shown in Table 1 were thereby produced.

Each of the obtained amorphous Si-N(-H)-based compounds shown in Table 1 was cracked by the same method as in Example 1 and compacted or shaped into the same almond shape as in Example 1 by the same method as in Example 1.

Each of the almond-shaped amorphous Si-N(-H)-based compound molded shaped products was charged into a graphite-made crucible of which interior is partitioned in a grid pattern, and fired under the following conditions by using a pusher furnace. The temperature was raised from room temperature to 1,000°C over 3 hours, raised from 1,100°C to 1,400°C at a temperature rising rate of 1°C/min, raised from 1,400 to 1,550°C over 2 hours, and held at 1,550°C for 1 hour, followed by cooling. The fired silicon nitride powder taken out was lightly disassociated by the same method as in Example 1 to obtain the silicon nitride powders of Comparative Examples 14 to 16 shown in Table 1, which are different from the silicon nitride powder of the present invention.

Subsequently, using the obtained silicon nitride powders of Comparative Examples 14 to 16, the silicon nitride powder-containing slurries for a release agent of Comparative Examples 14 to 16 were produced by the same method as in Example 1. Each of the obtained silicon nitride powder-containing slurries for a release agent of Comparative Examples 14 to 16 was applied onto the inner surface of the same quartz crucible as in Example 1 by the same method as in Example 1 and dried by the same method as in Example 1, and a release layer was baked over the inner surface of the quartz crucible by the same method as in Example 1 to obtain the polycrystalline silicon ingot casting molds of Comparative Examples 14 to 16. In all of the polycrystalline silicon ingot casting molds of Comparative Examples 14 to 16, the thickness of the release layer was from 176 to 212 μm in terms of an average from 5 point measurements.

Polycrystalline silicon ingots were manufactured by solidifying the molten silicon by the same method as in Example 1 except for using the polycrystalline silicon ingot casting molds of Comparative Examples 14 to 16. The release layer was evaluated by the same method as in Example 1, and the results shown in Table 1 were obtained.

In all Comparative Examples, a polycrystalline silicon ingot was anchored to the mold and could not be released and therefore, the polycrystalline silicon ingot was taken out from the mold by fracturing the mold by means of a hammer. It was confirmed that in all Comparative Examples, part of the release layer on the mold side or bottom surface was separated to expose the mold surface.

[Table 1]

(1-1)

| | Amorphous Si-N(-H)-Based Compound | | | Firing Conditions | | | Evaluation Results of Silicon Nitride Powder | | | | | |
|---|---|---|---|---|---|---|---|---|---|---|---|---|
| | Specific Surface Area RS (m2/g) | Oxygen Content Ratio RO (mass%) | RS/RO | Firing Furnace | Firing Temperature (°C) | Temperature Rising Rate (°C/min) | Specific Surface Area FS (m2/g) | Oxygen Content RatioFTO (mass%) | Internal Oxygen FIO (mass%) | Surface Oxygen FSO (mass%) | FS/FIO | FS/FSO |
| Example 1 | 450 | 0.73 | 616 | rotary kiln | 1500 | 40 | 21.6 | 1.4 | 0.52 | 0.88 | 41.5 | 24.5 |
| Example 2 | 375 | 1.31 | 286 | | 1500 | 12 | 22.3 | 1.8 | 1.01 | 0.83 | 22.1 | 26.9 |
| Example 3 | 480 | 0.45 | 1067 | | 1420 | 80 | 12.8 | 1.1 | 0.50 | 0.60 | 25.6 | 21.3 |
| Example 4 | 311 | 0.80 | 389 | | 1500 | 12 | 20.6 | 1.3 | 0.58 | 0.74 | 35.5 | 27.8 |
| Example 5 | 700 | 0.41 | 1707 | | 1500 | 40 | 14.5 | 1.2 | 0.48 | 0.75 | 30.2 | 19.3 |
| Example 6 | 820 | 0.95 | 863 | | 1415 | 70 | 18.4 | 1.4 | 0.62 | 0.81 | 29.7 | 22.7 |
| Example 7 | 700 | 0.70 | 1000 | | 1500 | 40 | 16.9 | 1.5 | 0.57 | 0.88 | 29.6 | 19.2 |
| Example 8 | 1150 | 0.45 | 2556 | | 1500 | 40 | 10.4 | 1.1 | 0.34 | 0.71 | 30.6 | 14.6 |
| Example 9 | 1150 | 1.90 | 605 | | 1500 | 40 | 27.8 | 2.0 | 0.89 | 1.13 | 31.2 | 24.6 |
| Example 10 | 1170 | 1.10 | 1064 | | 1415 | 365 | 21.7 | 1.6 | 0.72 | 0.85 | 30.1 | 25.5 |
| Example 11 | 700 | 1.00 | 700 | | 1450 | 40 | 16.4 | 1.3 | 0.52 | 0.77 | 31.5 | 21.3 |
| Example 12 | 700 | 0.27 | 2593 | | 1500 | 485 | 14.4 | 1.1 | 0.33 | 0.77 | 43.6 | 18.7 |
| Example 13 | 700 | 0.22 | 3182 | | 1650 | 40 | 7.2 | 0.66 | 0.14 | 0.42 | 51.4 | 17.1 |
| Example 14 | 450 | 0.12 | 3750 | | 1500 | 12 | 5.6 | 0.90 | 0.24 | 0.62 | 23.3 | 9.0 |
| Example 15 | 700 | 0.14 | 5000 | | 1500 | 17 | 6.4 | 1.0 | 0.28 | 0.70 | 22.9 | 9.1 |
| Example 16 | 700 | 0.62 | 1129 | | 1500 | 55 | 19.8 | 1.4 | 0.50 | 0.87 | 39.6 | 22.8 |
| Example 17 | 410 | 2.03 | 202 | | 1500 | 15 | 30.1 | 2.2 | 1.03 | 1.20 | 29.2 | 25.1 |
| Example 18 | 500 | 3.20 | 156 | | 1500 | 12 | 32.3 | 3.4 | 1.45 | 1.91 | 22.3 | 16.9 |
| Example 19 | 650 | 3.98 | 163 | | 1550 | 100 | 38.9 | 3.3 | 1.69 | 1.65 | 23.0 | 23.6 |
| Example 20 | 520 | 0.55 | 945 | | 1550 | 60 | 12.8 | 1.2 | 0.58 | 0.60 | 22.1 | 21.3 |

EP 3 020 686 A1

(continued)

| | Amorphous Si-N(-H)-Based Compound | | | Firing Conditions | | | Evaluation Results of Silicon Nitride Powder | | | | | |
|---|---|---|---|---|---|---|---|---|---|---|---|---|
| | Specific Surface Area RS (m2/g) | Oxygen Content Ratio RO (mass%) | RS/RO | Firing Furnace | Firing Temperature (°C) | Temperature Rising Rate (°C/min) | Specific Surface Area FS (m2/g) | Oxygen Content Ratio FTO (mass%) | Internal Oxygen FIO (mass%) | Surface Oxygen FSO (mass%) | FS/FIO | FS/FSO |
| Comparative Example 1 | 1220 | 0.27 | 4519 | rotary kiln | 1550 | 12 | 4.0 | 0.33 | 0.20 | 0.13 | 20.0 | 30.8 |
| Comparative Example 2 | 285 | 4.13 | 69 | | 1450 | 485 | 43.2 | 4.9 | 1.98 | 2.90 | 21.8 | 14.9 |

(1-2)

| | Amorphous Si-N(-H)-Based Compound | | | Firing Conditions | | | Evaluation Results of Silicon Nitride Powder | | | | | |
|---|---|---|---|---|---|---|---|---|---|---|---|---|
| | Specific Surface Area RS (m2/g) | Oxygen Content Ratio RO (mass%) | RS/RO | Firing Furnace | Firing Temperature (°C) | Temperature Rising Rate (°C/min) | Specific Surface Area FS (m2/g) | Oxygen Content Ratio FTO (mass%) | Internal Oxygen FIO (mass%) | Surface Oxygen FSO (mass%) | FS/FIO | FS/FSO |
| Comparative Example 3 | 1210 | 4.30 | 281 | rotary kiln | 1350 | 100 | 184 | 9.8 | 4.99 | 4.81 | 36.9 | 38.3 |
| Comparative Example 4 | 1250 | 7.70 | 162 | | 1350 | 100 | 230 | 14.2 | 7.70 | 6.50 | 29.9 | 35.4 |
| Comparative Example 5 | 853 | 0.35 | 2437 | | 1500 | 8 | 6.4 | 1.1 | 0.35 | 0.75 | 18.3 | 8.5 |
| Comparative Example 6 | 653 | 3.34 | 196 | | 1450 | 8 | 28.0 | 3.4 | 1.40 | 2.00 | 20.0 | 14.0 |
| Comparative Example 7 | 800 | 0.25 | 3200 | | 1450 | 6 | 5.2 | 0.91 | 0.23 | 0.68 | 22.6 | 7.6 |
| Comparative Example 8 | 735 | 0.15 | 4900 | | 1650 | 6 | 4.0 | 0.68 | 0.18 | 0.50 | 22.2 | 8.0 |
| Comparative Example 9 | 385 | 3.95 | 97 | | 1450 | 20 | 41.2 | 4.5 | 1.76 | 2.74 | 23.4 | 15.0 |
| Comparative Example 10 | 295 | 3.03 | 97 | | 1500 | 50 | 39.2 | 3.5 | 1.75 | 1.75 | 22.4 | 22.4 |
| Comparative Example 11 | 600 | 3.86 | 155 | | 1450 | 575 | 38.6 | 3.5 | 1.66 | 1.82 | 23.3 | 21.2 |
| Comparative Example 12 | 600 | 0.21 | 2857 | | 1500 | 8 | 5.3 | 0.89 | 0.23 | 0.66 | 23.0 | 8.0 |

(continued)

| | Amorphous Si-N(-H)-Based Compound | | | Firing Conditions | | | Evaluation Results of Silicon Nitride Powder | | | | | |
|---|---|---|---|---|---|---|---|---|---|---|---|---|
| | Specific Surface Area RS (m2/g) | Oxygen Content Ratio RO (mass%) | RS/RO | Firing Furnace | Firing Temperature (°C) | Temperature Rising Rate (°C/min) | Specific Surface Area FS (m2/g) | Oxygen Content Ratio FTO (mass%) | Internal Oxygen FIO (mass%) | Surface Oxygen FSO (mass%) | FS/FIO | FS/FSO |
| Comparative Example 13 | 415 | 0.95 | 437 | | 1550 | 1 | 11.5 | 1.2 | 0.77 | 0.45 | 14.9 | 25.6 |
| Comparative Example 14 | 301 | 1.13 | 266 | pusher furnace | 1550 | 1 | 12.8 | 1.5 | 0.75 | 0.75 | 17.1 | 17.1 |
| Comparative Example 15 | 700 | 0.60 | 1167 | | 1550 | 1 | 3.1 | 0.76 | 0.49 | 0.27 | 6.3 | 11.5 |
| Comparative Example 16 | 700 | 0.75 | 933 | | 1550 | 1 | 4.1 | 0.87 | 0.61 | 0.26 | 6.7 | 15.8 |

EP 3 020 686 A1

24

(2-1)

| | Evaluation Results of Silicon Nitride Powder | | | | | | | Evaluation of Polycrystalline Silicon Ingot Casting Mold | | |
| | Particle Size Distribution (μm) | | | D10/D90 | Fe Content Ratio (ppm) | C content Ratio (mass%) | Crystallization Degree (%) | Main Particle Shape | Releasability of Polycrystalline Silicon Ingot | Adherence of Release Layer to Mold | Area Density of Release layer % |
| | D10 | D50 | D90 | | | | | | | | |
|---|---|---|---|---|---|---|---|---|---|---|---|
| Example 1 | 0.37 | 0.56 | 2.14 | 0.17 | 2.4 | 0.06 | 99.5 | granular | A | A | 76 |
| Example 2 | 0.23 | 0.94 | 2.47 | 0.09 | 2.3 | 0.05 | 99.4 | granular | A | A | 78 |
| Example 3 | 0.31 | 0.85 | 2.63 | 0.12 | 2.9 | 0.06 | 99.1 | granular | A | A | 77 |
| Example 4 | 0.27 | 0.89 | 2.50 | 0.11 | 2.5 | 0.06 | 99.6 | granular | A | A | 78 |
| Example 5 | 0.40 | 0.70 | 2.20 | 0.18 | 2.8 | 0.07 | 99.6 | granular | A | A | 78 |
| Example 6 | 0.26 | 0.91 | 2.49 | 0.10 | 2.6 | 0.05 | 99.2 | granular | A | A | 77 |
| Example 7 | 0.40 | 0.62 | 2.47 | 0.16 | 2.7 | 0.07 | 99.6 | granular | A | A | 78 |
| Example 8 | 0.48 | 0.82 | 2.43 | 0.20 | 3.6 | 0.05 | 99.7 | granular | A | A | 78 |
| Example 9 | 0.31 | 0.58 | 2.79 | 0.11 | 2.1 | 0.05 | 99.5 | granular | A | A | 71 |
| Example 10 | 0.24 | 0.97 | 2.47 | 0.10 | 2.7 | 0.06 | 99.5 | granular | A | A | 75 |
| Example 11 | 0.39 | 0.59 | 2.21 | 0.18 | 2.7 | 0.07 | 99.6 | granular | A | A | 73 |
| Example 12 | 0.28 | 0.90 | 2.52 | 0.11 | 2.8 | 0.06 | 99.6 | granular | A | A | 78 |
| Example 13 | 0.47 | 0.82 | 2.44 | 0.19 | 2.9 | 0.07 | 99.8 | granular | A | A | 75 |
| Example 14 | 0.52 | 0.95 | 3.01 | 0.17 | 5.7 | 0.06 | 99.7 | granular | A | A | 72 |
| Example 15 | 0.49 | 0.88 | 2.89 | 0.17 | 4.8 | 0.06 | 99.7 | granular | A | A | 72 |
| Example 16 | 0.36 | 0.57 | 2.35 | 0.15 | 2.6 | 0.05 | 99.6 | granular | A | A | 76 |
| Example 17 | 0.19 | 0.99 | 2.41 | 0.08 | 2.3 | 0.06 | 99.2 | granular | A | A | 72 |
| Example 18 | 0.18 | 1.01 | 2.53 | 0.07 | 2.2 | 0.06 | 99.0 | granular | A | A | 71 |
| Example 19 | 0.14 | 1.05 | 2.74 | 0.05 | 2.1 | 0.06 | 99.0 | granular | A | A | 70 |
| Example 20 | 0.33 | 0.88 | 2.68 | 0.12 | 2.9 | 0.05 | 99.5 | granular | A | A | 76 |
| Comparative Example 1 | 0.60 | 0.95 | 2.50 | 0.24 | 6.0 | 0.07 | 99.7 | granular | C | C | 55 |

(continued)

| | Evaluation Results of Silicon Nitride Powder | | | | | | | | Evaluation of Polycrystalline Silicon Ingot Casting Mold | | |
| | Particle Size Distribution (μm) | | | D10/D90 | Fe Content Ratio (ppm) | C content Ratio (mass%) | Crystallization Degree (%) | Main Particle Shape | Releasability of Polycrystalline Silicon Ingot | Adherence of Release Layer to Mold | Area Density of Release layer % |
| | D10 | D50 | D90 | | | | | | | | |
| Comparative Example 2 | 0.11 | 1.20 | 3.30 | 0.03 | 2.5 | 0.06 | 98.5 | aggregated + needle-like | C | B | 50 |
| Comparative Example 3 | 0.50 | 5.70 | 17.6 | 0.03 | 2.8 | 0.06 | 5.0 | aggregated | C | C | - |

(2-2)

| | Evaluation Results of Silicon Nitride Powder | | | | | | | Evaluation of Polycrystalline Silicon Ingot Casting Mold | | |
|---|---|---|---|---|---|---|---|---|---|---|---|
| | Particle Size Distribution (μm) | | | | Fe Content D10/D90 (ppm) | C content (mass) | Crystallization Degree % (%) | Main Particle Shape | Releasability of Polycrystalline Silicon Ingot | Adherence of Release Layer to Mold | Area Density of Layer (%) |
| | D10 | D50 | D90 | | | | | | | | |
| Comparative Example 4 | 0.75 | 8.06 | 22.5 | 0.03 | 3.0 | 0.06 | 0 | aggregated | C | C | - |
| Comparative Example 5 | 0.58 | 0.93 | 2.71 | 0.21 | 4.9 | 0.06 | 99.7 | granular | B | B | 71 |
| Comparative Example 6 | 0.33 | 1.00 | 2.41 | 0.14 | 2.3 | 0.05 | 99.2 | granular | B | B | 70 |
| Comparative Example 7 | 0.56 | 0.96 | 2.91 | 0.19 | 5.9 | 0.07 | 99.7 | granular | B | A | 71 |
| Comparative Example 8 | 0.64 | 0.99 | 2.33 | 0.27 | 6.8 | 0.06 | 99.8 | granular | C | B | 71 |
| Comparative Example 9 | 0.16 | 1.17 | 3.12 | 0.05 | 2.5 | 0.06 | 97.5 | granular | C | B | 64 |
| Comparative Example 10 | 0.12 | 1.08 | 2.85 | 0.04 | 2.1 | 0.06 | 99.0 | granular | B | B | 62 |
| Comparative Example 11 | 0.12 | 1.15 | 3.02 | 0.04 | 2.5 | 0.06 | 92.3 | aggregated + needle-like | C | B | 55 |
| Comparative Example 12 | 0.60 | 0.98 | 2.75 | 0.22 | 5.7 | 0.06 | 99.7 | granular | B | B | 69 |
| Comparative Example 13 | 0.44 | 0.87 | 1.90 | 0.23 | 15.3 | 0.12 | 99.6 | granular | C | B | 50 |
| Comparative Example 14 | 0.56 | 1.01 | 2.86 | 0.20 | 17.3 | 0.13 | 99.7 | aggregated + needle-like | C | B | 49 |
| Comparative Example 15 | 0.78 | 1.43 | 3.67 | 0.21 | 26.7 | 0.10 | 99.8 | granular | C | B | 59 |
| Comparative Example 16 | 0.69 | 1.12 | 3.02 | 0.23 | 21.3 | 0.11 | 99.8 | granular | C | B | 65 |

EP 3 020 686 A1

INDUSTRIAL APPLICABILITY

According to the present invention, a release agent allowing good releasability of a polycrystalline silicon ingot and exhibiting good adherence to a mold even after the casting of a polycrystalline silicon ingot can be formed on a polycrystalline silicon ingot casting mold by low-temperature baking without using an additive such as a binder and therefore, a polycrystalline silicon ingot casting mold capable of manufacturing a polycrystalline silicon ingot at a low cost can be provided.

**Claims**

1.  A silicon nitride powder for a release agent of a polycrystalline silicon ingot casting mold, wherein:

    the specific surface area is from 5 to 40 $m^2/g$,
    assuming that the content ratio of oxygen present in a particle surface layer is FSO (mass%), the content ratio of oxygen present inside a particle is FIO (mass%), and the specific surface area is FS ($m^2/g$),

    FS/FSO is from 8 to 30 and
    FS/FIO is 22 or more,

    and
    the ratio D10/D90 between the 10 vol% diameter D10 and the 90 vol% diameter D90 in the measurement of a particle size distribution on a volume basis by a laser diffraction particle size distribution meter is from 0.05 to 0.20.

2.  The silicon nitride powder for a release agent of a polycrystalline silicon ingot casting mold according to claim 1, wherein the Fe (iron) content is 10 ppm or less.

3.  The silicon nitride powder for a release agent of a polycrystalline silicon ingot casting mold according to claim 1 or 2, wherein FS/FSO is from 15 to 30 and FS/FIO is from 30 to 60.

4.  A method for producing the silicon nitride powder for a release agent of a polycrystalline silicon ingot casting mold claim in any one of claims 1 to 3, which is a method for producing a silicon nitride powder by firing an amorphous Si-N(-H)-based compound with a specific surface area of 300 to 1,200 $m^2/g$ at a temperature of 1,400 to 1,700°C in a nitrogen-containing inert gas atmosphere or a nitrogen-containing reducing gas atmosphere while flowing said amorphous Si-N(-H)-based compound in a continuous firing furnace, wherein
    assuming that the specific surface area of said amorphous Si-N(-H)-based compound is RS ($m^2/g$) and the oxygen content ratio is RO (mass%), RS/RO is 100 or more, and
    at the time of said firing, said amorphous SiN(-H)-based compound is heated at a temperature rise rate of 12 to 500°C/min in a temperature range from 1,100 to 1, 400°C.

5.  A slurry containing a silicon nitride powder for a release agent of a polycrystalline silicon ingot casting mold, which is obtained by mixing the silicon nitride powder according to any one of claims 1 to 3 with water.

6.  The slurry containing a silicon nitride powder for a release agent of a polycrystalline silicon ingot casting mold according to claim 5, which does not contain a binder.

7.  A method for manufacturing a polycrystalline silicon ingot casting mold having a release layer, comprising:

    a slurry forming step of mixing the silicon nitride powder according to any one of claims 1 to 3 with water to form a slurry,
    a slurry applying step of coating a mold surface with said slurry,
    a slurry drying step of drying said slurry applied onto the mold surface, and
    a heat treatment step of heating, in an oxygen-containing atmosphere, the mold of which surface is coated with said slurry.

8.  The method for manufacturing a polycrystalline silicon ingot casting mold having the release layer according to claim 7, wherein said slurry does not contain a binder.

9.    The method for manufacturing a polycrystalline silicon ingot casting mold having the release layer according to claim 7 or 8, wherein said heat treatment is performed at a temperature of 400 to 800°C.

10.  A polycrystalline silicon ingot casting mold having, on an inner surface of the mold, a release layer composed of the silicon nitride powder according to any one of claims 1 to 3.

11.  A method for manufacturing a polycrystalline silicon ingot, comprising:

a step of casting a polycrystalline silicon ingot from a silicon melt by using the polycrystalline silicon ingot casting mold according to claim 10, and
a step of taking out a cast polycrystalline silicon ingot from said mold.

# FIG. 1

# FIG. 2

RELEASE
LAYER

MOLD

# FIG. 3

RELEASE
LAYER

MOLD

**INTERNATIONAL SEARCH REPORT**

| International application No. |
| --- |
| PCT/JP2014/068324 |

A. CLASSIFICATION OF SUBJECT MATTER
*C01B33/02*(2006.01)i, *C01B21/068*(2006.01)i, *B22C3/00*(2006.01)n

According to International Patent Classification (IPC) or to both national classification and IPC

B. FIELDS SEARCHED

Minimum documentation searched (classification system followed by classification symbols)
C01B33/02, C01B21/068, B22C3/00

Documentation searched other than minimum documentation to the extent that such documents are included in the fields searched
Jitsuyo Shinan Koho        1922-1996    Jitsuyo Shinan Toroku Koho    1996-2014
Kokai Jitsuyo Shinan Koho  1971-2014    Toroku Jitsuyo Shinan Koho    1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2012/090541 A1  (Ube Industries, Ltd.), 05 July 2012 (05.07.2012), claims; examples & US 2013/0264460 A1    & EP 2660201 A1 & CN 103269975 A         & SG 191412 A & KR 10-2013-0133820 A | 1-11 |
| A | WO 2012/090542 A1  (Ube Industries, Ltd.), 05 July 2012 (05.07.2012), claims; examples & EP 2660200 A1          & CN 103347814 A & SG 191391 A          & KR 10-2013-0133822 A | 1-11 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 October, 2014 (07.10.14) | 21 October, 2014 (21.10.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2014/068324

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/090543 A1 (Ube Industries, Ltd.), 05 July 2012 (05.07.2012), claims; examples & US 2013/0273189 A1 & EP 2660202 A1 & CN 103282307 A & SG 191386 A & KR 10-2014-0005221 A | 1-11 |
| A | JP 5-117035 A (Ube Industries, Ltd.), 14 May 1993 (14.05.1993), entire text (Family: none) | 1-11 |
| A | JP 11-171512 A (Ube Industries, Ltd.), 29 June 1999 (29.06.1999), claims; examples (Family: none) | 1-11 |
| A | JP 6-329404 A (Ube Industries, Ltd.), 29 November 1994 (29.11.1994), claims; examples (Family: none) | 1-11 |
| A | JP 2000-302421 A (Ube Industries, Ltd.), 31 October 2000 (31.10.2000), claims; examples & JP 2000-317 A | 1-11 |
| A | JP 4-209706 A (Ube Industries, Ltd.), 31 July 1992 (31.07.1992), entire text (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010195675 A
- JP 2012090541 A
- JP 9156912 A
- JP 4209706 A